# EUROPEAN PATENT APPLICATION

(11) **EP 1 936 598 A2**
(43) Date of publication of application: **25.06.2008**
(21) Application number: 07011093.7
(22) Date of filing: 06.06.2007
(51) Int. Cl.: G09G 3/34

(54) **Display device, writing device, and display program**

(30) Priority: 17.11.2006 JP 2006311755
(71) Applicant: Fuji Xerox Co., Ltd., Minato-ku, Tokyo (JP)
(72) Inventor: Machida, Yoshinori, Ashigarakami-gun Kanagawa (JP); Suwabe, Yasufumi, Ashigarakami-gun Kanagawa (JP); Shigehiro, Kiyoshi, Ashigarakami-gun Kanagawa (JP); Tatsuura, Satoshi, Ashigarakami-gun Kanagawa (JP); Abe, Masaaki, Ashigarakami-gun Kanagawa (JP)
(74) Representative: Dreiss, Fuhlendorf, Steimle & Becker

(57) **Abstract**

A display device includes: a display medium including a pair of substrates disposed with a distance therebetween, at least one of the substrates having translucency, a dispersion medium that is disposed between the pair of substrates, and a particle group that is dispersed in the dispersion medium and moved in the dispersion medium according to an electric field formed by applying a voltage exceeding a predetermined threshold voltage between the pair of substrates; a voltage applying unit that applies a voltage between the pair of substrates; and a control unit that controls the voltage applying unit. The control unit controls the voltage applying unit so as to apply a first voltage exceeding the threshold voltage between the pair of substrates, then to apply a voltage equal to or lower in magnitude than the threshold voltage but having a polarity that is the reverse to the polarity of the first voltage.

## Description

### BACKGROUND

### Technical Field

The invention relates to a display device, a writing device, and a display program.

### Related Art

Conventionally, there is well known an image display medium in which colored particles are used as a rewritable image display medium (for example, see Japanese Patent Application National Publication No. 2005-524865 and Japanese Patent Application Laid-Open (JP-A) Nos. 01-267525 and 2006-58901). The image display medium includes a pair of substrates and a particle group, which is enclosed between the pair of substrates in a manner such as to be movable according to an electric field formed between the pair of substrates. In order to prevent the particles from being concentrated in a particular area between the substrates, in some cases, a gap member is provided to divide the space between the substrates into plural cells.

Examples of the particle groups enclosed between the pair of substrates include one kind of particle group that is colored in a particular color and plural kinds of particle groups having different colors, and different electric field intensities required for movement thereof.

In the image display medium, the enclosed particles are moved by applying a voltage between the pair of substrates, which causes an image to be displayed according to the amount of particles moved to one of the substrates and their color.

That is, the voltage is applied between the substrates according to the color and density of the image to be displayed, and thereby the particle group to be moved is moved to one of the substrates to display the image.

### SUMMARY

The invention provides a display device which can suppress degradation of image quality, a writing device, and a display medium storing a display program.

A first aspect of the present invention provides a display device comprising: a display medium comprising a pair of substrates disposed with a distance therebetween, at least one of the substrates having translucency, a dispersion medium that is disposed between the pair of substrates, and a particle group that is dispersed in the dispersion medium and moved in the dispersion medium according to an electric field formed by applying a voltage exceeding a predetermined threshold voltage between the pair of substrates; a voltage applying unit that applies a voltage between the pair of substrates; and
a control unit that controls the voltage applying unit to apply a first voltage exceeding the threshold voltage between the pair of substrates, then to apply a voltage equal to or lower in magnitude than the threshold voltage but having a polarity that is the reverse to the polarity of the first voltage.

A second aspect of the present invention provides a display device comprising: a display medium comprising a pair of substrates disposed with a distance therebetween, at least one of the substrates having translucency, a dispersion medium that is disposed between the pair of substrates, and a particle group that is dispersed in the dispersion medium and moved in the dispersion medium according to an electric field formed by applying a voltage exceeding a predetermined threshold voltage between the pair of substrates; a voltage applying unit that applies a voltage between the pair of substrates; and a control unit that controls the voltage applying unit so as to apply the first voltage between the pair of substrates, the first voltage exceeding the threshold voltage of a particle group to be moved, and then to form an electric field, the electric field moving another particle group, which is suspended in the dispersion medium and is not the particle group to be moved, in a direction opposite to the moving direction of the particle group to be moved.

A third aspect of the present invention provides a display device comprising: a display medium comprising a pair of substrates disposed with a distance therebetween, at least one of the substrates having translucency, a dispersion medium that is disposed between the pair of substrates, and a plurality of particle groups that are dispersed in the dispersion medium and moved in the dispersion medium according to an electric field formed by applying a voltage exceeding a predetermined threshold voltage between the pair of substrates, the plurality of particle groups being different from each other in terms of color and threshold voltage; a voltage applying unit that applies a voltage between the pair of substrates; and a control unit that controls the voltage applying unit so as to apply the first voltage between the pair of substrates, the first voltage exceeding a threshold voltage of the particle group having the smallest threshold voltage in one or a plurality of the particle group(s) to be moved, and then to apply a voltage equal to or lower in magnitude than the threshold voltage but having a polarity that is the reverse to the polarity of the first voltage.

A fourth aspect of the present invention provides a display device comprising: a display medium comprising a pair of substrates disposed with a distance therebetween, at least one of the substrates having translucency, a dispersion medium that is disposed between the pair of substrates, and a plurality of particle groups that are dispersed in the dispersion medium and moved in the dispersion medium according to an electric field formed by applying a voltage exceeding a predetermined threshold voltage between the pair of substrates, the plurality of particle groups being different from each other in terms of color and threshold voltage; a voltage applying unit that applies a voltage between the pair of substrates; and a control unit that controls the voltage applying unit so as to apply the first voltage between the pair of substrates, the first voltage exceeding the threshold voltage of the particle group having the smallest threshold voltage in the one or the plurality of particle group(s) to be moved, and then to form the electric field, the electric field moving particle group(s), which is/are suspended in the dispersion medium and are not the particle group(s) to be moved, in the direction that is the opposite to the moving direction of the particle group(s) to be moved.

A fifth aspect of the present invention provides a writing device comprising: a voltage applying unit that applies a voltage between a pair of substrates of a display medium, the display medium comprising a pair of substrates disposed with a distance therebetween, at least one of the substrates having translucency, a dispersion medium that is disposed between the pair of substrates, and a particle group that is dispersed in the dispersion medium, the particle group being moved in the dispersion medium according to an electric field that is formed by applying a voltage exceeding a predetermined threshold voltage between the pair of substrates; and a control unit that controls the voltage applying unit so as to apply a first voltage exceeding the threshold voltage between the pair of substrates, then to apply a voltage equal to or lower in magnitude than the threshold voltage but having a polarity that is the reverse to the polarity of the first voltage.

A sixth aspect of the present invention provides a writing device comprising: a voltage applying unit that applies a voltage between a pair of substrates of a display medium, the display medium comprising a pair of substrates disposed with a distance therebetween, at least one of the substrates having translucency, a dispersion medium that is disposed between the pair of substrates, and a particle group that is dispersed in the dispersion medium, the particle group being moved in the dispersion medium according to an electric field that is formed by applying a voltage exceeding a predetermined threshold voltage between the pair of substrates; and a control unit controls the voltage applying unit so as to apply the first voltage between the pair of substrates, the first voltage exceeding the threshold voltage of a particle group to be moved, and then to form an electric field, the electric field moving another particle group, which is suspended in the dispersion medium and is not the particle group to be moved, in a direction opposite to the moving direction of the particle group to be moved.

A seventh aspect of the present invention provides a display device comprising: a display medium comprising a pair of substrates disposed with a distance therebetween, at least one of the substrates having translucency, a dispersion medium that is disposed between the pair of substrates, and a plurality of particle groups that are dispersed in the dispersion medium and moved in the dispersion medium according to an electric field formed by applying a voltage exceeding a predetermined threshold voltage between the pair of substrates, the plurality of particle groups being different from each other in terms of color and threshold voltage; a voltage applying unit that applies a voltage between the pair of substrates; and a control unit that controls the voltage applying unit so as to apply the first voltage between the pair of substrates, the first voltage exceeding a threshold voltage of the particle group having the smallest threshold voltage in one or a plurality of the particle group(s) to be moved, and then to apply a voltage equal to or lower than the threshold voltage but having a polarity that is the reverse to the polarity of the first voltage.

An eighth aspect of the present invention provides a display device comprising: a display medium comprising a pair of substrates disposed with a distance therebetween, at least one of the substrates having translucency, a dispersion medium that is disposed between the pair of substrates, and a plurality of particle groups that are dispersed in the dispersion medium and moved in the dispersion medium according to an electric field formed by applying a voltage exceeding a predetermined threshold voltage between the pair of substrates, the plurality of particle groups being different from each other in terms of color and threshold voltage; a voltage applying unit that applies a voltage between the pair of substrates; and a control unit that controls the voltage applying unit so as to apply the first voltage between the pair of substrates, the first voltage exceeding the threshold voltage of the particle group having the smallest threshold voltage in the one or the plurality of particle group(s) to be moved, and then to form the electric field, the electric field moving particle group(s), which is/are suspended in the dispersion medium and are not the particle group(s) to be moved, in the direction that is the opposite to the moving direction of the particle group(s) to be moved.

A ninth aspect of the present invention provides a display program that causes a computer: to execute a process to drive and display a display medium, the display medium comprising a pair of substrates disposed with a distance therebetween, at least one of the substrates having translucency, a dispersion medium that is disposed between the pair of substrates, and a particle group that is dispersed in the dispersion medium, the particle group being moved in the dispersion medium according to an electric field formed by applying a voltage exceeding a predetermined threshold voltage between the pair of substrates, the display program causing a computer to execute a process comprising: applying a first voltage exceeding the threshold voltage between the pair of substrates, and then applying a second voltage between the pair of substrates of the display medium equal to or lower in magnitude than the threshold voltage but with a polarity that is the reverse to the polarity of the first voltage.

A tenth aspect of the present invention provides a display program that causes a computer to execute a process to drive and display a display medium, the display medium comprising a pair of substrates disposed with a distance therebetween, at least one of the substrates having translucency, a dispersion medium that is disposed between the pair of substrates, and a particle group that is dispersed in the dispersion medium, the particle group being moved in the dispersion medium according to an electric field which is formed by applying a voltage exceeding a predetermined threshold voltage between the pair of substrates, the display program causing a computer to execute a process comprising: applying a first voltage exceeding the threshold voltage between the pair of substrates, and then applying a second voltage between the pair of substrates of the display medium equal to or lower in magnitude than the threshold voltage but with a polarity that is the reverse to the polarity of the first voltage; applying, between the pair of substrates of the display medium, a third voltage that is the first voltage exceeding the threshold voltage of the particle group having the smallest threshold voltage in magnitude of the one or the plurality of the particle group(s) to be moved; and then applying, between the pair of substrates of the display medium, a fourth voltage having a polarity that is the reverse of the polarity of the first voltage of the particle group having the smallest threshold voltage in magnitude of the one or the plurality of the particle group(s) to be moved, the fourth voltage being equal to or lower in magnitude than the threshold voltage of the particle group having the smallest threshold voltage in magnitude of the one or the plurality of the particle group(s) to be moved.

Other aspects, features, and advantages of the invention will become apparent from the following description taken in conjunction with the accompanying drawing.

### BRIEF DESCRIPTION OF THE DRAWINGS

Exemplary example embodiments of the invention will be described in detail based on the following figures, in which:
FIG 1 is a schematic view showing a configuration of a display device according to a first example embodiment of the invention;
FIG 2 is a diagram showing an example of threshold characteristics of a particle group in the first example embodiment;
FIG 3 is a flowchart showing a process performed by a control unit in the first example embodiment;
FIGs. 4A to 4D are explanatory views schematically showing transfer modes of a particle group when a voltage is applied between substrates of a display medium of the display device in the first example embodiment;
FIG 5 is a schematic view showing a display device according to a second example embodiment;
FIG 6 is a schematic view showing a display device according to a third example embodiment;
FIGs. 7A and 7B are schematic views showing a display device according to a fourth example embodiment;
FIG 8 is a schematic view showing a display device according to a fifth example embodiment;
FIG 9 is a diagram showing an example of threshold characteristics of each of plural kinds of particle groups in the fifth example embodiment;
FIG 10 is an explanatory view schematically showing the relationship between the mode of electric field forming applied to a display medium and the transfer mode of the particle group in the fifth example embodiment;
FIG 11 is a flowchart showing a process performed by a control unit in the fifth example embodiment;
FIG 12 is an explanatory view schematically showing a relationship between the mode of electric field forming applied to the display medium and the transfer mode of the particle group in the fifth example embodiment;
FIGs. 13A and 13B are schematic views showing a configuration of an example of a display device different from the display device of the first example embodiment; and
FIG 14 is a schematic view showing a configuration of a display medium of the fourth example embodiment.

### DETAILED DESCRIPTION

Preferred example embodiments of the invention will be described below with reference to the drawings.

### First Example Embodiment

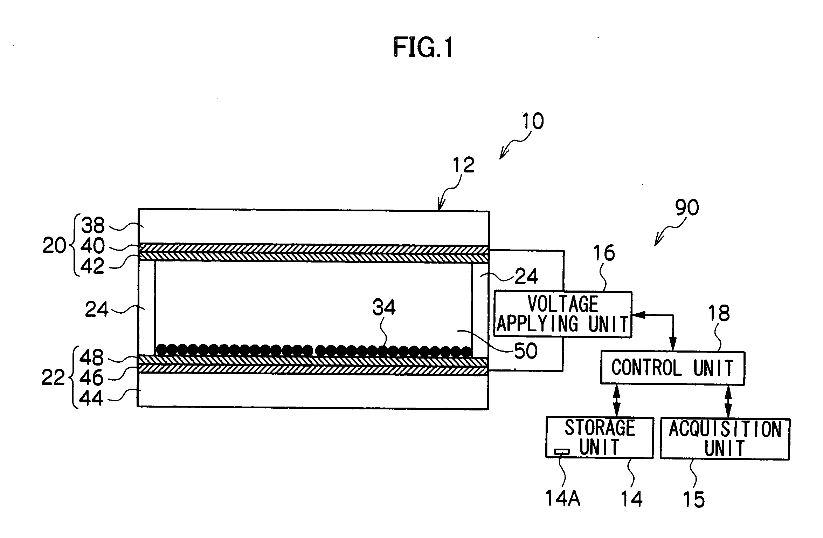

As shown in FIG 1, a display device 10 according to a first example embodiment of the invention includes a display medium 12 and a writing device 90.

The writing device 90 includes a voltage applying unit 16, a control unit 18, a storage unit 14, and an acquisition unit 15. The voltage applying unit 16 applies a voltage to the display medium 12.

The display medium 12 is structured to include a display substrate 20, a back substrate 22 disposed in a spaced opposing relationship to the display substrate 20, gap member 24 that maintains a predetermined spacing between the substrates and divides the space between the substrates 20 and 22 into plural cells, and a particle group 34 enclosed in each cell.

As used herein, cell, above indicates the region surrounded by the display substrate 20, the back substrate 22, and the gap member 24. A dispersion medium 50 is enclosed in the cell. The particle group 34 (described in detail later) is configured from plural particles, the particle group 34 is dispersed in the dispersion medium 50, and the particle group 34 is moved between the display substrate 20 and the back substrate 22 according to the intensity of the electric field formed in the cell. In the first example embodiment, explanation will be given assuming that the color and the threshold voltage (described in detail later) of the particle group 34 enclosed in one cell have been adjusted in advance so as to become predetermined values.

The display medium may be structured in a manner such that the gap members 24 are provided so as to correspond to each pixel when the image is displayed in the display medium 12, and a cell is formed so as to correspond to each pixel, thereby enabling display for each pixel.

For the purpose of simple explanation, the first example embodiment will be described with reference to the drawings in which attention is focused on a single cell.

The display substrate 20 has a structure in which a surface electrode 40 and a surface layer 42 are layered in this order on a support substrate 38. The back substrate 22 has a structure in which a backside electrode 46 and a surface layer 48 are layered in this order on a support substrate 44.

The display substrate 20 or both the display substrate 20 and the back substrate 22 have translucency. In the first example embodiment, the translucency shall mean that transmittance of visible light is about 70% or higher, preferably about 90% or higher.

Glass or plastics such as a polycarbonate resin, an acrylic resin, a polyimide resin, a polyester resin, epoxy resin, a polyethersulfone resin can be cited as examples of the support substrate 38 and the support substrate 44.

Oxides of indium, tin, cadmium, and antimony, a composite oxide such as ITO, metals such as gold, silver, copper, and nickel, and organic materials such as polypyrroles and polythiophenes can be used for the backside electrode 46 and the surface electrode 40. These materials can be used in the form of the single-layer film, a mixed film, or a composite film, which can be formed by a process such as vapor deposition, sputtering, or coating. The backside electrode 46 and the surface electrode 40 have thicknesses ranging from about 100 to about 2000A when vapor deposition or sputtering is used. Using a well-known technique such as etching, the backside electrode 46 and the surface electrode 40 can be formed in a desired pattern, e.g., in a matrix shape or a stripe shape which enables passive matrix drive.

The surface electrode 40 may be embedded in the support substrate 38. The backside electrode 46 may be embedded in the support substrate 44. In such cases, sometimes the materials of the support substrate 38 and support substrate 44 have an influence on electric properties, magnetic properties, and flow properties of each particle of the particle group 34. Thus, such materials need to be selected according to each composition of the particles of the particle group 34.

The backside electrode 46 and the surface electrode 40 may be separated from the display substrate 20 and the back substrate 22 and disposed outside the display medium 12.

Although a case in which the display substrate 20 and the back substrate 22 include the electrodes (surface electrode 40 and backside electrode 46) respectively is described above, it is also possible that only one of the backside electrode 46 and the surface electrode 40 may include the electrode.

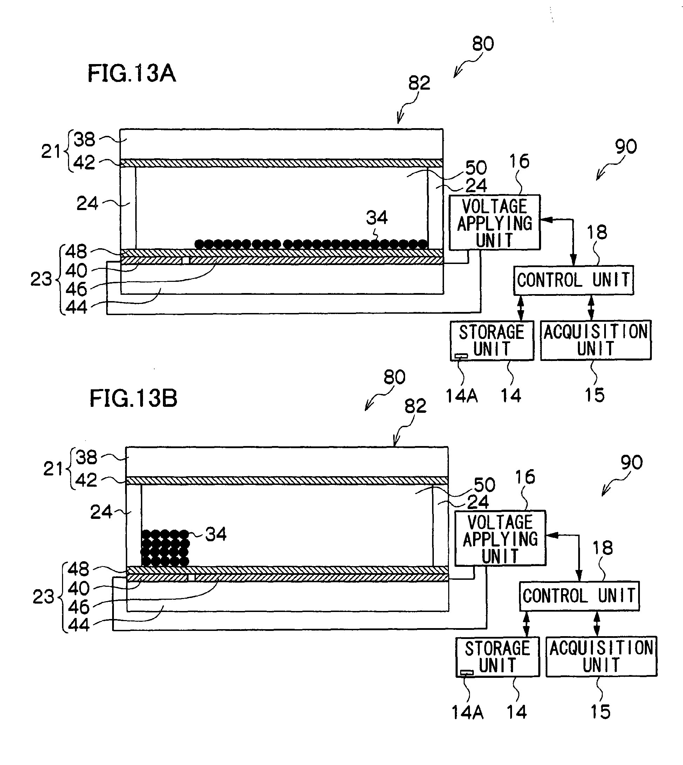

Specifically, for example, a display medium 82 may be provided in a display device 80 as shown in FIG 13A. The display device 80 includes the display medium 82 and a writing device 90. The display medium 82 includes the display substrate 21 which constitutes the image display surface, the back substrate 23 which opposes the display substrate 21 with a gap therebetween, the gap member 24 which maintains the gap at a predetermined interval between the substrates, and the particle group 34. In the display substrate 21, the surface layer 42 is layered on the support substrate 38. On the back substrate 23, after the surface electrode 40 and the backside electrode 46 are provided as the two kinds of electrode on the support substrate 44, the surface layer 48 is further layered. Then, the surface electrode 40 and the backside electrode 46 are connected to voltage applying unit 16 such that a signal can be received and transmitted.

In the display device 80 shown in FIG 13A and 13B, the same component as that of the display device 10 of FIG 1 is designated by the same numeral, and detailed description thereof is omitted. In the display medium configured as shown in FIG. 13, when the voltage is applied between the surface electrode 40 and the backside electrode 46 under the control of the voltage applying unit 16 so that the particle group 34 is moved toward the backside electrode 46, the particle group 34 is moved to the area where the backside electrode 46 of the back substrate 23 is provided, as shown in FIG 13A. On the contrary, when the voltage is applied between the surface electrode 40 and the backside electrode 46 under the control of the voltage applying unit 16 so that the particle group 34 is moved toward the surface electrode 40, the particle group 34 is moved to the area where the surface electrode 40 of the back substrate 42 is provided, as shown in FIG 13B.

Further, the display medium may be provided with a further electrode on the side of the display substrate 21 of the display medium 82 of FIG 13A. The further electrode may be connected to the voltage applying unit 16 such that the signal can be received and transmitted. This enables the control to be performed more finely.

In the display medium 12 (see FIG 1), in order to enable active matrix driving, the support substrate 38 and the support substrate 44 may include a TFT (Thin Film Transistor) in each pixel. Preferably TFTs are formed not to the display substrate but to the back substrate 22, since wire layering and component mounting are easily performed.

When the display medium 12 is formed by a simple matrix drive scheme, the configuration of the display device 10 including the display medium 12, which will be described in detail later, can be simplified. When the display medium 12 is formed by active matrix driving using TFTs, a higher display speed than that of simple matrix driving can be achieved.

In the case where the surface electrode 40 and the backside electrode 46 are formed on the support substrate 38 and the support substrate 44 respectively, in order to prevent breakage of the surface electrode 40 and the backside electrode 46 or generation of leakage between the electrodes which leads to sticking of each particle of the particle group 34, preferably the surface layer 42 and the surface layer 48 are respectively formed as dielectric films on the surface electrode 40 and the backside electrode 46 as required.

Polycarbonate, polyester, polystyrene, polyimide, epoxy, polyisocyanate, polyamide, polyvinyl alcohol, polybutadiene, polymethylmethacrylate, copolymer nylon, ultraviolet-curable acrylic resin, and fluorine resin can be used as the materials for the surface layer 42 and surface layer 48.

Besides the above-described material, a material in which a charge transporting material is contained in the above materials can also be used as the material for the dielectric film.

Examples of the charge transporting material include hole transporting materials such as a hydrazone compound, a stilbene compound, a pylazoline compound, and an arylamine compound. Examples of the charge transporting material also include electron transporting materials such as a fluorenone compound, a diphenoquinone derivative, a pyrane compound, and zinc oxide. A self-supporting resin having a charge transporting property can also be used.

Specifically, polyvinyl carbazole, and the polycarbonate described in U.S. Patent No. 4806443 in which polycarbonate is polymerized by a particular hydroxyarylamine and bis-chloroformate can be given as examples thereof Since the surface layer 42 and surface layer 48, which are formed as dielectric films, possibly have an influence on charging properties and flow properties of the particle group 34, the surface layer 42 and surface layer 48 are selected according to the composition of the particle group 34. As described above, since it is necessary that the display substrate 20 constituting the display medium 12 have the translucency, preferably materials having translucency from the above-described materials are used.

The gap member 24 which maintains the gap between the display substrate 20 and the back substrate 22 is formed so as not to reduce the translucency of the display substrate 20, and can be made of a thermoplastic resin, a thermocurable resin, electron beam curable resin, a photocurable resin, rubber, metal and the like.

The gap member 24 may be integral with one or other of the display substrate 20 or the back substrate 22. In such a case, the gap member 24 may be formed by an etching process, in which one of the support substrate 38 and support substrate 44 is etched, a laser-working process, by press-processing using a previously prepared mole, or a printing process. In this case, the gap member 24 can be provided at one or both of the display substrate 20 and/or the back substrate 22.

Although the gap member 24 may be colored or non-colored, it is preferable that the gap member 24 be non-colored or transparent, so as not to adversely affect the image displayed in the display medium 12. In this case, for example, a transparent resin such as polystyrene, polyester, and acrylic can be used.

Preferably the dispersion medium 50 in which the particle group 34 is dispersed is an insulative liquid or high-resistance liquid (hereinafter, "insulative liquid" will be referred to as "high-resistance liquid"). As used herein, the term "insulative" shall mean that volume resistivity is 1010 cm or higher, desirably 1012 cm or higher.

Examples of the high-resistance liquid includes hexane, cyclohexane, toluene, xylene, decane, hexadecane, kerosene, paraffin, isoparaffin, silicone oil, dichloroethylene, trichloroethylene, perchloroethylene, high-purity petroleum, ethylene glycol, alcohols, ethers, esters, dimethyl formamide, dimethyl acetamide, dimethyl sulfoxide, N-methylpyrrolidone, 2-pyrrolidone, N-methyl formamide, acetnitrile, tetrahydrofuran, propylene carbonate, ethylene carbonate, benzine, diisopropylnaphthalene, olive oil, isopropanol, trichlorotrifluoroethane, tetrachloroethane, dibromotetrafluoroethane, and mixtures thereof

Further, it is possible to use water (so-called pure water) as the dispersion medium 50 by removing impurities to achieve the following volume resistance. Water can be used as the dispersion medium 50 when the volume resistance is 103 cm or higher. The volume resistance is preferably 1010 cm or higher, and more preferably 1012 cm or higher.

Acid, alkali, a salt, a dispersion stabilizer, an antioxidant stabilizer, an ultraviolet absorption stabilizer, antibacterial agent, and a preservative can be added to the high-resistance liquid as required. Preferably the additives are added such that the above specific range of volume resistance is achieved.

Charge control agents such as an anionic surfactant, a cationic surfactant, a dipolar-ion surfactant, a non-ionic surfactant, a fluorosurfactant, a silicon surfactant, a metal soap, an alkyl phosphate ester, and a succinate imides can also be added to the high-resistance liquid.

Examples of the non-ionic surfactant include polyoxyethylene nonylphenyl ether, polyoxyethylene octylphenyl ether, polyoxyethylene dodecylphenyl ether, polyoxyethylene alkyl ether, polyoxyethylene fatty acid ester, sorbitan fatty acid ester, polyoxyethylene sorbitan fatty acid ester, and fatty acid alkylol amide. Examples of the anionic surfactant include alkylbenzene sulfonate, alkylphenyl sulfonate, alkylnaphthalene sulfonate, salts of higher fatty acids, sulfate esters of higher fatty acid esters, and sulfonic acids of higher fatty acid esters. Examples of the cationic surfactant include primary to tertiary amine salts and quaternary ammonium salt. The charge control agent preferably ranges from about 0.01 % by weight to about 20 % by weight or less with respect to the solid content of particles, and more preferably ranges from about 0.05 % by weight to about 10 % by weight. When the charge control agent is less than about 0.01 % by weight, the desired charging control effect is not sufficiently obtained. When the charge control agent is more than about 20 % by weight, conductivity is excessively raised in the development solution.

Preferably the particle group 34 enclosed in the display medium 12 is dispersed in a polymer resin as the dispersion medium 50. Preferably the polymer resin is a polymer gel or a network polymer.

Examples of the polymer resin include polymer gels derived from natural polymers such as agarose, agaropectin, amylase, sodium alginate, propyleneglycol ester alginate, isolichenan, insulin, ethylcellulose, ethylhydroxyethylcellulose, curdlan, casein, carrageenan, carboxymethyl cellulose, carboxymethyl starch, callose, agar, chitin, chitosan, silk fibroin, guar gum, quince seed, crown gall polysaccharide, glycogen, glucomannan, keratin sulfate, keratin protein, collagen, cellulose acetate, gellan gum, schizophyllan, gelatin, vegetable ivory mannan, tunicin, dextran, dermatan sulfate, starch, tragacanth gum, nigeran, hyaluronic acid, hydroxyethylcellulose, hydroxypropylcellulose, pustulan, funoran, degraded xyloglucan, pectin, porphyran, methylcellulose, methyl starch, laminaran, lichenan, lentinan, and locust bean gum. Examples of the polymer resin also include, in the case of a synthetic polymer, almost all polymer gels.

Examples of the polymer resin that may be given also include polymers in which a functional group of alcohol, ketone, ether, ester, or amide is included in a repeat unit, for example, polyvinyl alcohol, poly (metha) acrylamide and derivatives thereof, polyvinyl pyrrolidone, polyethylene oxide, and copolymers including these polymers.

Among the above examples, gelatin, polyvinyl alcohol, and poly (metha) acrylamide are preferably used from the viewpoints of production stability and electrophoretic properties.

Preferably these polymer resins are used as the dispersion medium 50, together with the high-resistance liquid.

The following coloring agents are mixed into the dispersion medium 50, which allows the display medium 12 to be displayed in a color different from the color of the particle group 34. For example, in the case where the particle group 34 has a black color, when a coloring agent which exhibits a white color is mixed in the dispersion medium 50, the white color and the black color can be displayed in the display medium 12.

Examples of the white coloring agent mixed in the dispersion medium 50 include white pigment fine particles such as titanium oxide, magnesium oxide, and zinc oxide. In the case where the dispersion medium 50 is colored in another color other than white, organic or inorganic pigments, and oil-soluble dyes can be used. Examples of the coloring agent that may be given include known coloring agents typical examples being carbon black, a copper phthalocyanine based cyan color material, an azo-based yellow color material, an azo based magenta color material, a quinacridone based magenta color material, a red color material, a green color material, and a blue color material. Specifically, aniline blue, Calco oil blue, chrome yellow, ultramarine blue, Dupont oil red, quinoline yellow, methylene blue chloride, phthalocyanine blue, malachite green oxalate, lampblack, rose bengal, C. I. pigment red 48:1, C. I. pigment red 122, C. I. pigment red 57:1, C. I. pigment yellow 97, C. I. blue 15:1, C.I. pigment blue 15:3 and the like.

The particle group 34 is configured from plural particles. When a voltage in excess of a threshold voltage, predetermined according to threshold characteristics of the particle group 34, is applied between the surface electrode 40 and the backside electrode 46 (i.e., between the display substrate 20 and the back substrate 22), an electric field of an intensity equal to or higher than a predetermined electric field intensity is formed between the display substrate 20 and the back substrate 22, whereby the particle group 34 is caused to move in the dispersion medium 50. The change of the display color in the display medium 12 is generated by the movement of each particle constituting the particle group 34 in the dispersion medium 50.

In this example embodiment, the threshold characteristics shall mean characteristics which contribute to the display. That is, a change in brightness (i.e., density) of the display color is not visible in the display medium 12 when a voltage of the threshold voltage or less is applied between the substrates, but when the voltage exceeding the threshold voltage is applied between the display substrate 20 and back substrate 22, the particles constituting the particle group 34 are moved in the dispersion medium 50 to change the display density by the electric field formed in the dispersion medium 50.

The threshold voltage indicates, when the voltage applied between the display substrate 20 and the back substrate 22 is continuously changed, the voltage when there is a change from the state in which there is no change in display density generated in the display medium 12 by the movement of each particle constituting particle group 34, to a state in which a change in display density begins to appear in the display medium 12. That is, no change in display density is visible in the display medium 12 when a voltage of the threshold voltage or less is applied to the display medium 12 between the display substrate 20 and the back substrate 22, and a change in display density is visible when a voltage exceeding the threshold voltage is applied to the display medium 12, due to the movement of each particle constituting particle group 34.

The state in which "a change in display density is visible in the display medium 12" shall mean the state in which the change in display density becomes visible, when evaluation is performed by visual observation while the voltage applied between the surface electrode 40 and the backside electrode 46 of the display medium 12 is continuously changed from 0V. The state in which the change in display density is visible in the evaluation shall mean that a ratio of density change to the density before the voltage application is about 0.1 or less when the density of the display substrate 20 is measured with a densitometer (Trade Name: X-Rite404A; manufactured by X-Rite, Incorporated).

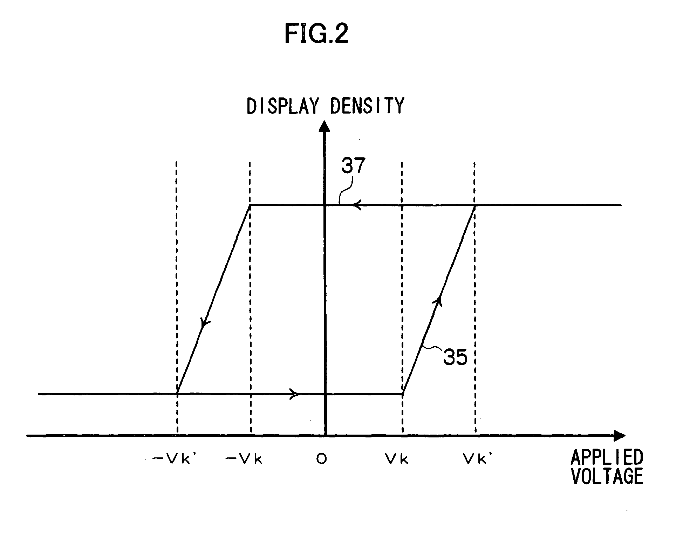

Specifically, the particle group 34 in the display medium 12 has threshold characteristics shown in FIG 2. In FIG 2, the particle group 34 is charged in a negative potential. As shown by the solid line 35 of FIG 2, when a voltage Vk is applied between the display substrate 20 and the back substrate 22, a change in display density begins appearing in the display medium 12 by the movement of the particle group 34. The change in display density substantially stops (is saturated) when a voltage Vk', larger than the voltage Vk, is applied.

Similarly, the change in display density begins appearing in the display medium 12 by the movement of the particle group 34 when a voltage -Vk is applied between the display substrate 20 and the back substrate 22 (see solid line 37 of FIG 2). The change in display density due to the movement of the particles between the substrates stops when a voltage -Vk', whose absolute value is larger than that of the voltage -Vk, is applied.

That is, in FIG 2, when the voltage ranging from the voltage -Vk to the voltage Vk is applied between the display substrate 20 and the back substrate 22, the particles of particle group 34 are not moved to such an extent that a change in display density is generated in the display medium 12. In this case, the absolute values of the voltage Vk and voltage -Vk are defined as the threshold voltage.

The threshold voltage corresponds to "electric field intensity" which is established in the dispersion medium 50 when the change in display density begins appearing in the display medium 12. The "electric field intensity" is a potential difference (V/m) per unit distance. That is, the threshold voltage shall mean the absolute value of the voltage applied between the substrates to generate the electric field having the intensity at which the amount of particle causing the density change in the display medium 12 is moved from one substrate to another.

Hereinafter, the absolute values of the voltage Vk' and voltage -Vk' are referred to as density saturation voltage.

In the present example embodiment, in the threshold voltage of the same kind of the particle group 34, explanation is given of a case when the positive potential (+) and the negative potential (-) are equal to each other. However, even in the same kind of the particle group 34, sometimes the positive potential differs from the negative potential in the threshold voltage depending on the configuration of the display medium. In such cases, the positive voltage and the negative voltage may be used as the threshold voltages for each kind of the particle group 34 when the voltage is applied to the display medium 12 during the display.

The threshold voltage of the particle group 34 are determined by an electrostatic force of the particle group 34 and a force which constrains the particle group 34 onto the side of the display substrate 20 or the side of the back substrate 22 (hereinafter, referred to as constraint force). The threshold voltage is increased as the absolute value of the constraint force is increased, and the threshold voltage is decreased as the absolute value of the constraint force is decreased.

Examples of the constraint force include a Van der Waals force between the particles or between the particle and the display substrate 20 or back substrate 22, an electrostatic mirror-image force acting between the particle and the display substrate 20 or back substrate 22, a flow resistance of the particle caused by weak interaction between the particles, and a magnetic force.

Next, the force acting as the constraint force will be described. An adhesion force adhering to each substrate acts between each particle constituting the particle group 34 and the display substrate 20 or back substrate 22, when the particle group 34 adheres onto one side of the display substrate 20 and the back substrate 22. The adhesion force is the substance specific Van der Waals force generated by physical contact, and the adhesion force depends on the contact surface area of the particle which depends on the contact surface area of the particles with the substrate and the distance between the particle and the substrate. The adhesion force is increased as the contact surface area is increased, and the adhesion force is increased as the distance is decreased. The contact surface area and the distance depend on a particle diameter (volume average primary particle diameter) and shape factor of the particles. The Van der Waals force also depends on the materials of the particles and substrate surface. In the case where the particle has a charge, the mirror-image force is generated between the display substrate 20 to which the particle adheres and the back substrate 22.

In the case where the particle is magnetic, a magnetic force is generated between the particles which are located closer to the display substrate 20 or the back substrate 22 and the display substrate 20 or back substrate 22. In this case, a magnet is provided at the display substrate 20 or at the back substrate 22 to generate a magnetic gradient in the periphery of the display substrate 20, or of the back substrate 22, based on magnetic flux from the magnet, and thus the magnetic force acts on the particles located closer to the display substrate 20 or the back substrate 22.

Since the plural kinds of the particle groups 34 are dispersed in the dispersion medium 50, a resistance is generated at an interface between the surface of each particle and the dispersion medium 50 when, to start the movement of the particles, the electric field is applied between the display substrate 20 and the back substrate 22. The generation of the resistance is attributed to the fact that the particles accumulated on the substrate surface or in the periphery of the substrate form moderate interaction between the particles. The resistance becomes large when the movement of each particle is started, and the resistance is gradually decreased as the particle is moved. Hereinafter the maximum value of the resistance (resistance at the time of starting the movement) at the interface between the dispersion medium 50 and each particle of the particle group 34 is referred to as "flow resistance". The flow resistance is also thought to contribute to the constraint force.

Accordingly, in order to adjust the threshold voltage of the particle group 34, it is necessary to adjust the constraint force of each kind of the particle group 34. Thus, in the particle constituting the particle group 34, it is necessary to adjust one or several items of the average charging amount, the flow resistance for the dispersion medium at each particle surface, the average magnetic amount (intensity of magnetization), the particle diameter, and the shape factor of the particle.

Specifically, the average charging amount of each particle constituting the particle group 34 can be adjusted by adjusting: the kind and amount of the charge control agent mixed in the resin, the kind and amount of the polymer chain connected to the particle surface; the kind and amount of the external additive which is added or embedded in the particle surface; the kind and amount of the surfactant, polymer chain, or coupling agent which is imparted to the particle surface: and the specific surface area (volume average primary particle diameter and particle shape factor) of the particles.

The constraint force can be adjusted by adjusting the average surface roughness of the surface layer 42 and average surface roughness of the surface layer 48 of the display substrate 20 and back substrate 22.

Specifically, the flow resistance against the dispersion medium on each particle surface can be adjusted by adjusting a frequency of vibration which is imparted to the particles from the display substrate 20 and back substrate 22 to vibrate the particles on the display substrate 20 and back substrate 22, and in the periphery of the display substrate 20 and back substrate 22.

The average magnetic amount of each particle can be adjusted by various methods of imparting the magnetic property to the particle. For example, like magnetic toner in conventional electrophotographic technology, the particle can be produced by mixing the magnetic material such as powder type magnetite in the resin, and the particle can be produced by dispersing and polymerizing the magnetic material and a monomer. The particle can also be produced by depositing the magnetic material in a fine holes of a porous particle. There is also known a method of coating the magnetic material. For example, the particle in which the magnetic material is coated with the resin can be produced by performing the polymerization from an active site provided on the magnetic material surface, and the particle in which the magnetic material is coated with the resin can be produced by depositing the dissolved resin on the magnetic material surface. Light, transparent or colored organic magnetic material can also be used as the magnetic material. The average magnetic amount of the particle can be adjusted by the kind and amount of the magnetic material used.

The particle diameter is adjusted, specifically when the particles are produced. In the case where the particles are produced by the polymerization method, the particle diameter can be adjusted by the amount of dispersing agent, dispersing conditions, and heating conditions. In the case where the particles are produced by a kneading method, pulverizing method and classifying method, the particle diameter can be adjusted by the classification conditions. In the case where the particle material is produced by ball milling, the particle diameter can be adjusted by adjusting the size of steel balls used in the ball milling, rotating time, and rotating speed. However, the adjustment of the particle diameter is not limited to the above methods.

The shape factor of the particle can preferably be adjusted specifically by the method of drying the particles to remove the organic solvent in the step of producing the particle, specifically, as disclosed in JP-A No. 10-10775, wherein the polymer is dissolved in a solvent, a coloring agent is mixed, and the particles are obtained by dispersion in an aqueous solvent in the presence of an inorganic dispersing agent, a so-called suspension polymerization method, and an organic solvent which is compatible with the monomer and has no polymerization property is added to perform the suspension polymerization, and the particles are produced. A freeze drying method can be cited as an example of the drying method. The freeze drying method is preferably performed in the range of about -10°C to about -200°C, preferably in the range of about -30°C to about -180°C. The freeze drying method is performed at pressure of 40 Pa or less, preferably at pressure of 13 Pa or less. JP-A No. 2000-292971 also discloses a method of controlling the particle shape, in which small particles are aggregated and unified, increasing the size of the particles to obtain the desired particle diameter.

In the display substrate 20 and the back substrate 22, the average surface roughness of the surface layer 42 and the average surface roughness of the surface layer 48 are adjusted by mechanical methods and chemical methods. Examples of the mechanical method include sand blasting, embossing, stamping, mold peeling/separation, and mold transfer methods. Examples of the chemical methods include light irradiation methods and mixed solvent drying methods in which solvents having different drying speeds are used. The methods of adjusting the surface roughness of the substrate includes a method of applying a resin in which fluorine resin particles and polyamide resin particles are mixed and dispersed. The average surface roughness can be adjusted by the above methods.

Since the particle group 34 is moved in the dispersion medium 50, when the dispersion medium 50 has a viscosity of a predetermined value or more, fluctuations in the adhesion force of the particle to the back substrate 22 and display substrate 20 is increased, and thereby a threshold of the particle movement to the electric field may not be maintained. Therefore, it is also necessary to adjust the viscosity of the dispersion medium 50.

At a temperature of 20°C, from the viewpoint of the particle moving speed, i.e., the display speed, it is necessary that the viscosity of the dispersion medium 50 is within the range from about 0.1 mPa.s to about 20 mPa.s, preferably about 0.1 mPa.s to about 5 mPa s, and more preferably about 0.1 mPa.s to about 2 mPa. s.

The viscosity of the dispersion medium 50 can be adjusted by adjusting the molecular weight, structure, composition or the like of the dispersion medium. The viscosity can be measured using a viscometer (Trade Name: B-8L; product of Tokyo Keiki Co., Ltd.).

Examples of the particle of the particle group 34 include: a metal oxide particle such as glass beads, alumina, and titanium oxide; a thermoplastic or thermocurable resin particle; a particle in which the coloring agent is fixed to the surface of the resin particle; a particle in which the coloring agent is contained in the thermoplastic or thermocurable resin; and a metal colloid particle that shows color due to surface plasmon resonance function.

Examples of the thermoplastic resin used in manufacturing the particle include homopolymers or copolymers of: styrenes such as styrene and chlorostyrene; monoolefins such as ethylene, propylene, butylene, and isoprene; vinyl esters such as vinyl acetate, vinyl propionate, vinyl benzoate, and vinyl butyrate; α-methylenealiphatic monocarboxylates such as methyl acrylate, ethyl acrylate, butyl acrylate, dodecyl acrylate, octyl acrylate, phenyl acrylate, methyl methacrylate, ethyl methacrylate, butyl methacrylate, and dodecyl methacrylate; and vinyl ethers such as vinyl methyl ether, vinyl ethylether, and vinyl butyl ether; vinyl ketones such as vinyl methyl ketone, vinyl hexyl ketone, and vinyl isopropenyl ketone.

Examples of the thermocurable resin used in manufacturing the particle include a crosslinked resin such as a crosslinked copolymer mainly containing divinyl benzene and a crosslinked polymethylmethacrylate, a phenol resin, a urea resin, a melamine resin, a polyester resin, and a silicone resin. Examples of the typical binding resin include polystyrene, styrene-alkyl acrylate copolymer, styrene-alkyl methacrylate copolymer, styreneacrylonitrile copolymer, styrene-butadiene copolymer, styrene-maleic anhydride copolymer, polyethylene, polypropylene, polyester, polyurethane, epoxy resin, silicone resin, polyamide, modified rosin, and paraffin wax.

An organic or inorganic pigment and an oil-soluble dye can be used as the coloring agent. Examples of the coloring agent include magnetic powder such as magnetite and ferrite, carbon black, titanium oxide, magnesium oxide, zinc oxide, a copper phthalocyanine based cyan color material, an azo based yellow coloring material, an azo based magenta color material, a quinacridone based magenta color material, a red color material, a green color material, and a blue color material. Specific typical examples that may be given include aniline blue, Calco oil blue, chrome yellow, ultramarine blue, Dupont oil red, quinoline yellow, methylene blue chloride, phthalocyanine blue, malachite green oxalate, lampblack, rose bengal, C. I. pigment red 48:1, C. I. pigment red 122, C. I. pigment red 57:1, C. I. pigment yellow 97, C. I. blue 15:1, C.I. pigment blue 15:3.

A charge control agent may be mixed in the particle resin if needed. Conventional charge control agent used in the electrophotographic toner material can be used. Examples of the charge control agent include cetylpyridyl chloride, quaternary ammonium salts such as BONTRON P-51, BONTRON P-53, BONTRON E-84, and BONTRONE-81 (manufactured by Orient Chemical Industries, Ltd), a salicylic acid based metal complex, a phenol based condensate, tetraphenyl based compound, a metal oxide particle, and a metal oxide particle to which surface treatment is performed by various coupling agents

Magnetic material may be mixed into the particle or at the surface of the particle as required. If required, inorganic magnetic materials or organic magnetic materials to which color coating is performed may be used as the magnetic material. For the transparent magnetic materials, particularly preferable are transparent organic magnetic materials that do not impede the showing of color of a coloring pigment, and having a specific gravity smaller than that of the inorganic magnetic material. For example, a small-diameter colored magnetic powder disclosed in JP-A No. 2003-131420 can be used as the colored magnetic powder. Small-diameter colored magnetic powders include magnetic particles provided with a nucleus and a colored layer layered on the magnetic particle surface. The colored layer is formed to color the magnetic powder with a pigment so that it does not show through. For example, an optical-interference thin film is preferably used. The optical-interference thin film is one which is made of a non-color material such as SiO2 and Ti02. The optical-interference thin film has a thickness equal to a wavelength of light, and the optical-interference thin film reflects the light in a wavelength selective manner by the optical interference in the thin film.

An external additive may be adhered to the particle surface as required. Preferably the external additive particle is transparent so as not to have an influence on the color of the particle.

Inorganic particles made of metal oxide such as silicon oxide (silica), titanium oxide, and alumina may be used as the external additive. Surface treatment can be performed to inorganic particles with the coupling agent and silicone oil in order to adjust the charging property, flow property, and environmental dependence of the particle.

The coupling agent includes: positively charged coupling agents such as an aminosilane based coupling agent, an amino titanium based coupling agent, and a nitrile based coupling agent; and negatively charged coupling agents such as a silane based coupling agent containing no nitrogen atom (consisting of atoms except for the nitrogen), a titanium based coupling agent, an epoxy silane coupling agent, and an acrylic silane coupling agent. Silicone oils include positively charged silicone oil such as amino-modified silicone oil and negatively charged silicone oil such as dimethyl silicone oil, alkyl-modified silicone oil, - methylsulfone-modified silicone oil, methylphenyl silicone oil, chlorophenyl silicone oil, and fluorine-modified silicone oil. The coupling agent and the silicone oil are selected according to the desired resistance of the external additive.

From the above external additives, well-known hydrophobic silica or hydrophobic titanium oxide are preferably used, and particularly a titanium compound obtained by a reaction between TiO(OH)2 disclosed in JP-A No. 10-3177 and a silane compound such as a silane coupling agent are particularly suitably used. Any type of chlorosilane, alkoxysilane, silazane, and specific silylation agents can be used as the silane compound. The titanium compound is produced by causing the silane compound or silicone oil to react with TiO(OH)2 produced in a wet process and drying the reaction product. Since the titanium compound has not been subjected to a firing process with a temperature of several hundred degrees Celsius, strong bonding is not formed between the titanium atoms, aggregation is not generated, and the particle is left in the primary particle state. Since the silane compound or silicone oil is caused to react directly with TiO(OH)2, the processing amount of silane compound or silicone oil can be increased, the charging property can be controlled by adjusting the processing amount of silane compound or silicone oil, and the ability to be imparted with a charge can remarkably improved as compared with conventional titanium oxide.

The primary particle in the external additive has the diameter ranging from about 5 to about 100 nm, preferably about 10 to about 50 nm. However, the diameter of the primary particle is not limited to the above range.

A blending ratio of the external additive and particle is adjusted based on a balance between the particle diameter and the diameter of the external additive. When the external additive is excessively added, a part of the external additive becomes free from the surface of one of the particles and adheres to the surface of another particle, which causes the desired charging property not to be obtained. Usually, the amount of external additive ranges from about 0.01 to about 3 parts by weight to 100 parts of particle, preferably from about 0.05 to about 1 parts by weight to 100 parts of particle.

The external additive may be added to only one kind of the plural kinds of the particles, or the external additive may be added to plural kinds or all the kinds of the particles. In the case where the external additive is added to the surfaces of all the particles, the external additive is preferably driven into the particle surface with an impact force or the external additive is securely fixed to the particle surface by heating the particle surface. This enables the external additive to be prevented from separating from the particles, and an external additive having a different polarity thereto from aggregating strongly thereto, forming an aggregation that is difficult to separate by the electric field.

In the present example embodiment, explanation is given of an example where the color and the threshold voltage of each particle are previously adjusted in the particle group 34 enclosed in one cell. Therefore, the particle group 34 having the desired color and threshold voltage can be adjusted by selecting the above materials for the particle.

Any conventional method can be adopted as the method of producing the particle group 34. For example, as disclosed in JP-A No. 7-325434, a method can be used in which: a resin, a pigment, and a charge control agent are measured out to obtain a predetermined mixture ratio; the pigment is added and dispersed after the resin is heated and melted; the mixture product is cooled; thereafter, particles are prepared using a grinding machine such as a jet mill, a hammer mill, a turbo mill or the like; and then the thus-prepared particles are dispersed in a dispersion medium. Alternatively, a method may be used in which particles containing the charge control agent are prepared by a polymerization process such as suspension polymerization, emulsion polymerization, and dispersion polymerization, coacervation, melt dispersion, or emulsion aggregation method, and the particles are dispersed in a dispersion medium to produce a particle dispersion medium. Further, another method may be used in which: a resin having plactisizing properties is used; a dispersion medium, is not boiled; and a suitable apparatus is used which can cause the materials of the resin, coloring agent, charge control agent, and dispersion medium to be dispersed and kneaded at a temperature lower than the decomposition points of the resin and charge control agent and/or coloring agent using a proper machine. More specifically, the pigment, resin, and charge control agent are heated and melted in the dispersion medium using a meteoric mixer, a kneader or the like, and particles can be prepared by utilizing temperature dependency of solvent solubility of the resin to perform solidification/deposition while the molten mixture is stirred.

Further, a method may be used in which the above materials are placed in a suitable vessel provided with a particulate medium used in the dispersion and kneading processes, e.g., in an attritor or a heated vibration mill such as a heated ball mill, and dispersed and kneaded at a temperature in a preferable temperature range, e.g., from 80 to 160°C. Examples of the particulate medium include steel such as stainless steel and carbon steel, alumina, zirconia, and silica. In order to produce the particles by the above method, the materials which are previously put into the fluid state are dispersed in the vessel with the particulate medium, and the dispersion medium is cooled to precipitate the resin including the coloring agent from the dispersion medium. While continuously maintaining the state of motion during and after the cooling, the particulate medium generates shearing/impact to decrease the particle diameter.

The content (weight %) of the particle group 34 in all the masses of the cell is not particularly limited as long as the concentration at which the desired hue is obtained is maintained, and the content is adjusted according to a thickness (i.e., the distance between the display substrate 20 and the back substrate) of the cell. That is, in order to obtain the desired hue, the content is decreased as the thickness of the cell is increased, and the content is increased as the thickness of the cell is decreased. Usually the content ranges from about 0.01 to about 50 weight %.

Although a size of the cell in the display medium 12 is not particularly limited, usually a length in a plate surface direction of the display substrate 20 of the display medium 12 ranges from about 10 m to about 1 mm in order to prevent display density unevenness from being caused due to a unevenness of the particle groups on the display surface.

A fixing unit such as a combination of a bolt and a nut, a clamp, a clip, and a frame for fixing the substrates can be used in order to fix the display substrate 20 and the back substrate 22 to each other through the gap member 24. Fixing means such as a bonding agent, heat fusion, and ultrasonic welding may also be used.

The display medium 12 configured as above can be applied to a bulletin board to which an image can be stored and rewritten, a pass-along circulation, an electronic blackboard, advertisement, a signboard, a flashing display, electronic paper, an electronic newspaper, an electronic book, and a document sheet which can also be used with a copying machine/printer.

As described above, the display device 10 according to the present example embodiment of the invention is configured to include the display medium 12, the voltage applying unit 16 which applies a voltage to the display medium 12, the control unit 18, the storage unit 14 and the acquisition unit 15 (see FIG 1).

The display medium 12 corresponds to the display medium of the display device of the invention, the display device 10 corresponds to the display device of the invention, and the voltage applying unit 16 corresponds to the voltage applying unit of the display device of the invention. Further, the control unit 18 corresponds to the control unit of the display device of the invention, the acquisition unit 15 corresponds to the acquisition unit of the display device of the invention, and the storage unit 14 corresponds to the storage unit of the display device of the invention. The writing device 90 corresponds to the writing device of the invention.

The voltage applying unit 16 is electrically connected to the surface electrode 40 and the backside electrode 46. Although in the present example embodiment, both the surface electrode 40 and the backside electrode 46 are electrically connected to the voltage applying unit 16, it is also possible that one of the surface electrode 40 and the backside electrode 46 may be grounded while the other may be connected to the voltage applying unit 16.

The voltage applying unit 16, the storage unit 14, and the acquisition unit 15 are connected to the control unit 18 such that a signal can be transmitted and received.

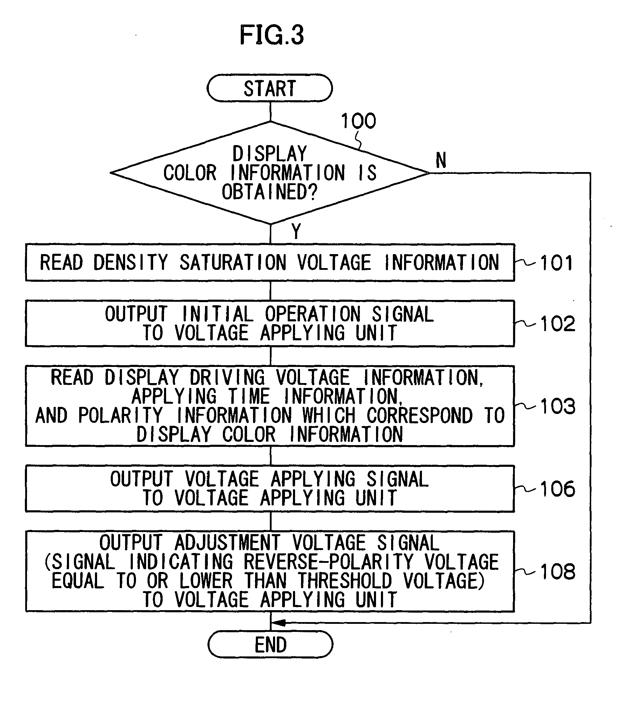

The control unit 18 is configured as a microcomputer that includes CPU (Central Processing Unit) that controls the operation of the entire device, RAM (Random Access Memory) that temporarily stores various types of data, and ROM (Read Only Memory) that previously stores various types of programs including a display program represented by a processing routine shown in FIG 3 (corresponding to the display program of the present invention), which will be described hereinafter.

The voltage applying unit 16, which is a voltage applying device for applying a voltage to the display substrate 40 and back substrate 46, applies a voltage, which is controlled by the control unit 18, between the surface electrode 40 and the backside electrode 46. The acquisition unit 15 acquires, from outside the display device 10, display color information including color information representative of the color of an image displayed on the display medium 12.

In the present example embodiment, explanation is given where the "display color" includes hue and brightness (density). Therefore, the "display color information" includes information representative of the hue and information representative of the density. The "color" displayed on the display medium used in the following description, is also an expression in which the "color" includes both the hue and the brightness.

A connection port for connection to a wired communication network or a wireless communication network can be given as examples of the acquisition unit 15. The acquisition unit 15 may be an operation panel that accepts an operation instruction from an operator. In such a case, the arrangement may be made such that when the operator provides an operation instruction for a display color information instruction of the acquisition unit 15, which serves as the operation panel, the acquisition unit 15 acquires display color information.

The storage unit 14, which previously stores various tables such as a storage area 14A, density saturation voltage information of the density saturation voltage, also stores various types of data.

In the present example embodiment, the storage area 14A is an area in which color information representative of the display color of a displayed image, threshold voltage information representative of a threshold voltage, display driving voltage information representative of a voltage in excess of the threshold voltage (corresponding to the first voltage of the display device of the present invention and hereinafter referred to as "display driving voltage"), polarity information representative of the polarity of the display driving voltage when applied, and applying time information representative of the period of time during which the display driving voltage is applied, are stored in correspondence to one another.

The color information stored in the storage area 14A is information representative of the color of an image displayed on the display medium 12. The threshold voltage information stored therein is information representative of the threshold voltage of the particle group 34 in the display medium 12.

The polarity information is either positive polarity information representative of the positive polarity or negative polarity information representative of the negative polarity. In the present example embodiment, when the polarity information is positive polarity information, the surface electrode 40 serves as the positive electrode while the backside electrode 46 serves as the negative electrode, and when the polarity information is negative polarity information, the surface electrode 40 serves as the negative electrode while the backside electrode 46 serves as the positive electrode, the opposite configuration is also suitable.

The display driving voltage information stored in the storage area 14A is information representative of a voltage exceeding the threshold voltage of the particle group 34, and more specifically is information representative of a voltage applied to the surface electrode 40 and backside electrode 46 to display an image of a color represented by corresponding color information. The applying time information is information representative of the applying time of the display driving voltage applied 5 to the surface electrode 40 and the backside electrode 46 to display an image of a color represented by corresponding color information.

Any voltage may be used as the display driving voltage as long as the voltage exceeds the threshold voltage of the particle group 34, however, the voltage can be determined from the range of the voltages exceeding the threshold voltage according to the applying time of the display driving voltage and the density, i.e., the brightness (density) of the displayed color. In the case where images of the same brightness are displayed, it is required that the applying time of the display driving voltage be set shorter as the display driving voltage is increased, and it is also required that the applying time of the display driving voltage be set longer as the display driving voltage is decreased.

That is, when an image of a predetermined color is displayed on the display medium 12, the storage area 14A stores at least the value of the display driving voltage applied between the surface electrode 40 and the backside electrode 46, the voltage applying time, the polarity of the display driving voltage.

The color information, polarity information, the threshold voltage information, the display driving voltage information, the voltage applying time information, and the density saturation voltage information may be previously measured before the image display process and stored in the storage area 14A. The storage of these pieces of information in the storage area 14A may be performed by a process (not shown) of the display program.

As described above, the color information, the threshold voltage information, the display driving voltage information, the polarity information, and the applying time information are stored in the storage area 14A in a manner such that they are correlated with one another. Thus, in the display driving voltage information and the applying time information which correspond to the color information, the threshold voltage information, and the polarity information to display a predetermined color, for example, the display driving voltage is adjusted while the applying time is kept constant, which determines the display driving voltage for displaying the predetermined color, or the applying time and the display driving voltage are determined to display the predetermined color by adjusting both the applying time and the display driving voltage. Then, the determined applying time information and display driving voltage information is stored in the storage area 14A while correlated with the color information, the threshold voltage information, and the polarity information. Thus, in the display driving voltage information and applying time information which correspond to the color information, the threshold voltage information, and the polarity information, the data stored in the storage area 14A is previously set such that the desired color can be displayed by controlling the display driving voltage information while the applying time information is kept constant, or the data stored in the storage area 14A is previously set such that the desired color can be displayed by controlling both the display driving voltage information and the applying time information.

The operation of the display device 10 will be described with reference to FIG 3.

FIG 3 is a flowchart showing a flow of the display program executed by the control unit 18 when an image of a predetermined color is displayed on the display medium 12. The display program is previously stored in a predetermined area of ROM (not shown) in the control unit 18, and CPU (not shown) in the control unit 18 reads and executes the display program.

The case in which the negatively charged particle group 34 enclosed in the display medium 12 is colored black will be described. The dispersion medium 50 will be described as being colored in white. That is, in the present example embodiment, description will be made of the case where the display medium 12 displays black or white through the movement of the particle group 34.

It is assumed that the particle group 34 exhibits the threshold characteristics shown in FIG 2 with respect to the voltage applied between the surface electrode 40 and the backside electrode 46. That is, the threshold characteristics of the particle group 34 is |Vk| and the density saturation voltage is |Vk'|.

Further, it is assumed that the particle group 34 has such threshold characteristics as shown FIG 2, and that the color information, the polarity information, the display driving voltage information, the applying time information, and the threshold voltage information are stored in the storage area 14A while correlated with one another.

In Step 100, it is determined whether or not the display color information is acquired by the acquisition unit 15. If the result of the determination is negative, the process is ended. If positive, the process proceeds to Step 101. The process of Step 100 corresponds to the acquiring step in the display program of the invention.

In Step 102, the density saturation voltage information is read from the storage unit 14 as an initial operation, and in next Step 102, an initial operation signal is outputted to the voltage applying unit 16. The initial operation signal indicates that a voltage equal to or higher than a density saturation voltage of the read density saturation voltage information is applied such that the surface electrode 40 becomes negative in polarity for a time T1 while the backside electrode 46 becomes of positive polarity.

The time T1 may be stored in a memory such as a ROM (not shown) of the control unit 18 or in the storage unit 14 as information representing the voltage applying time when a voltage is applied in the initial operation, and the information representing the time T1 may be read when the process of Step 102 is carried out.

The voltage applying unit 16, which receives the initial operation signal, continuously applies a voltage equal to or higher than the density saturation voltage |Vk'| between the surface electrode 40 and the backside electrode 46 for the time T1, with the surface electrode 40 as a negative electrode and with the backside electrode 46 as a positive electrode.

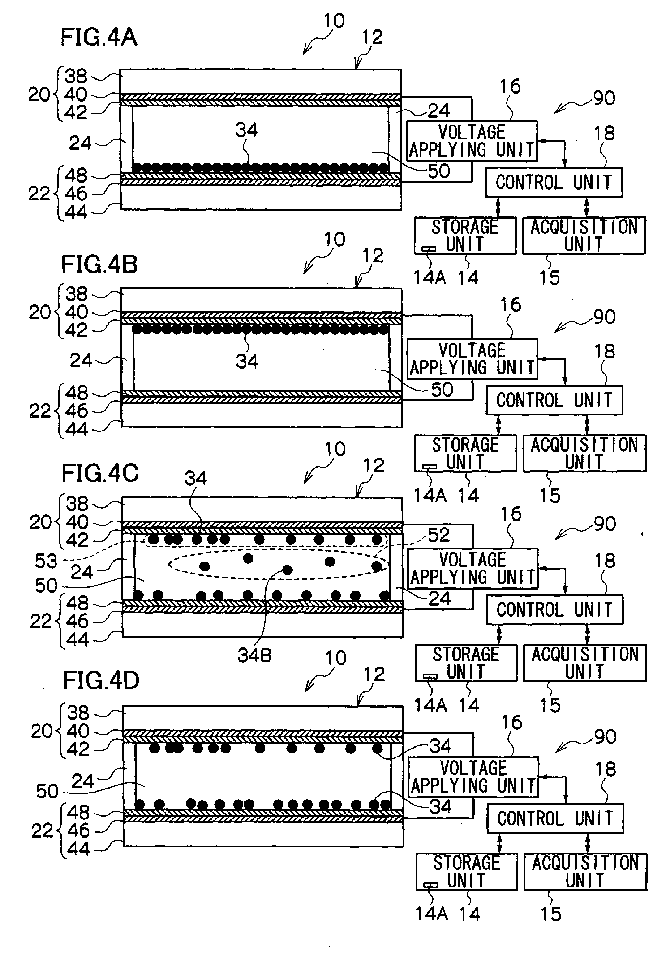

When the voltage equal to or higher than the density saturation voltage is applied between the substrates by the process of Step 102, negatively charged particles constituting the particle group 34 are moved toward the back substrate 22 and reach the back substrate 22 (see FIG 4A). At this point, the color of the display medium 12 visually observed from the side of the display substrate 20 is the color of the dispersion medium 50.

Then, between the surface electrode 40 and the backside electrode 46 is applied a voltage having a reverse polarity to that of the voltage applied between the substrates by the process of Step 102 and equal to or higher than the threshold voltage of the particle group 34, with the surface electrode 40 as the positive electrode and with the backside electrode 46 as the negative electrode. Consequently, in a preferable state, as shown in FIG4B, the particle group 34 moves toward and reaches the display substrate 20. Thus, a black display is provided by the particle group 34.

Here, when part of the particles of the particle group 34 are moved to adjust the quantity of particles which reach the display substrate 20 or the back substrate 22, the gradation expression (i.e., density adjustment) is able to be performed in the display medium 12. In such cases, it sometimes occurs that part of the particles constituting the particle group 34 do not reach the display substrate 20 and become suspended between the display substrate 20 and the back substrate 22 (see the particle group 34B shown by a dotted line of FIG 4C).

Also when the charged state of the particles is changed, it sometimes occurs that part of the particles become suspended between the display substrate 20 and the back substrate 22.

Therefore, in next Step 104, the polarity information, the display driving voltage information, and the applying time information, which correspond to the color information included in the display color information obtained in Step 100, are read from the storage area 14A of the storage unit 14. In Step 106, the voltage applying signal, which includes the read polarity information, display driving voltage information, and applying time information, is outputted to the voltage applying unit 16. The processes of Steps 104 and 106 correspond to the first voltage applying step of the display program of the invention.

In the present example embodiment, through the process of Step 104, the positive electrode information, the display driving voltage information, and the applying time information indicating an applying time T2 are read from the storage area 14A as the polarity information, the display driving voltage information, and the applying time information which correspond to the color information obtained in Step 100. The display driving voltage is higher than the threshold voltage |Vk| and lower than the density saturation voltage |Vk'|.

In the present example embodiment, description is given of the case where the display driving voltage is higher than the threshold voltage lVkl and lower than the density saturation voltage |Vk'|. However, as long as the display driving voltage exceeds the threshold voltage |vk|, it may be the same as, or higher or lower than, the density saturation voltage |vk'|.

The applying time T2 is previously measured as the time for which the display driving voltage is continuously applied to display the image having the color of the predetermined brightness and hue, and the applying time T2 is stored in the storage area 14A.

When the voltage applying unit 16 receives the voltage applying signal, the voltage applying unit 16 sets the surface electrode 40 to the positive electrode while the backside electrode 46 is set to the negative electrode according to the polarity information (positive electrode information in the first example embodiment), and the voltage applying unit 16 continuously applies the display driving voltage of the display driving voltage information for the applying time of the applying time information.

Through the process of Step 106, in the display medium 12, a part of the negatively charged particle group 34 is moved from the back substrate 22 to the display substrate 20 according to the applied display driving voltage and the applying time as shown in FIG. 4C.

At this point, sometimes there are particles (see the particle group 34B shown by the dotted line 52 of FIG 4C) which do not reach the display substrate 20 but are suspended between the display substrate 20 and the back substrate 22, and with the elapse of time these reach the display substrate 20 to exhibit a color display having a density different from the target brightness (density).

Therefore, in Step 108, the voltage applying unit 16 is controlled so as to apply the voltage which has the reverse polarity from that of the display driving voltage applied in Step 106 and is equal to or lower than the Step 106 of the particle group 34. The process of Step 108 corresponds to the second voltage applying step of the display program of the invention.

Specifically, polarity information representing the polarity of the display driving voltage applied in Step 106 and the threshold voltage of the particle group 34 are read from the storage unit 14, and an adjusted voltage signal including polarity information representing a polarity reverse to that of the read polarity information, voltage information representing a voltage equal to or lower than the threshold voltage, and information representing the voltage applying time T3 during which the last-mentioned voltage is applied is outputted to the voltage applying unit 16. Then, the routine is ended.

In the first example embodiment, the adjusted voltage signal, including the polarity information indicating the negative polarity, the voltage information indicating the voltage equal to or lower than the threshold voltage |Vk|, and the information indicating the voltage applying time T3, is outputted to the voltage applying unit 16.

After the voltage applying signal is outputted to the voltage applying unit 16 to display the image having the color which becomes the display target in the process of Step 106, the applying time T3 is stored in the memory such as ROM (not shown) in the control unit 18 or in the storage unit 14 as the information indicating the voltage applying time in applying the adjustment voltage. The applying time T3 may be read in when performing the process of Step 108.

The applying time T3 is determined by measuring in advance the time necessary for applying the voltage equal to or lower than the threshold voltage having the reverse polarity from the polarity of the display driving voltage applied in Step 106 in order to make the suspended particles reach the display substrate 20 or back substrate 22 in the opposite direction to the direction in which the particles of the particle group 34 are moved in the process of Step 106.

The voltage equal to or lower than the threshold voltage, which is included in the adjusted voltage signal, has a value equal to or lower than the threshold voltage of the particle group 34, and preferably the voltage has a value equal to or closer to the value of the threshold voltage in order to enable the suspended particles to move toward the substrate faster.

When the voltage applying unit 16 receives the adjusted voltage signal, the voltage applying unit 16 applies the voltage of the voltage information between the surface electrode 40 and the backside electrode 46 continuously for the time T3 according to the polarity information. In the case of the positive electrode information, the surface electrode 40 is made to serve as the positive electrode and the backside electrode 46 is made to serve as the negative electrode. In the case of the negative electrode information, the surface electrode 46 is made to serve as the negative electrode and the backside electrode 46 is made to serve as the positive electrode.

Through the process of Step 108, while the particles (see the particle 34A of FIG 4C) which reach the side of the display substrate 20 in the process of Step 106 are retained on the side of the display substrate 20, the suspended particles (see the particle group 34B shown by the dotted line 52 of FIG 4C) which are generated in the process of Step 106 are moved toward and reach the back substrate 22 as shown in FIG 4D.

As described above, according to the display device of the first example embodiment, after the display driving voltage exceeding the threshold voltage of the particle group 34 is applied between the substrates based on the polarity information, display driving voltage information, and applying time information which correspond to the color information included in the obtained display color information, the polarity of the applied display driving voltage is reversed, and a voltage equal to or lower than the threshold voltage is applied between the substrates.

Thus, in the particles constituting the particle group 34, the number of particles necessary to be able to express the color according to the display color information obtained in Step 100 is retained on the side of the display substrate 20, and the particles suspended between the display substrate 20 and the back substrate 22 are moved to and retained on the side of the back substrate 22, which suppresses the generation of the suspended particles.

### Second Example Embodiment

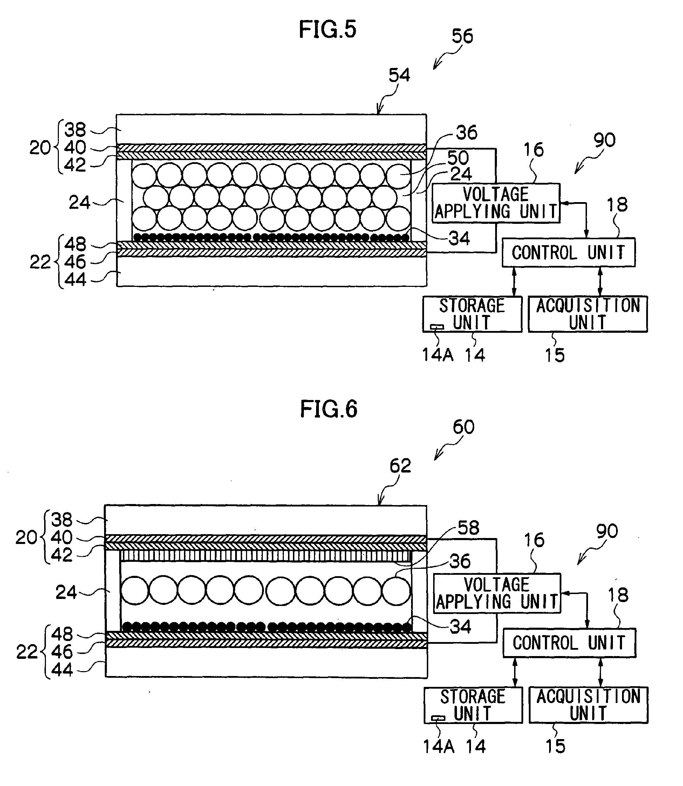

In the above-described example embodiment, description has been made of the case where the dispersion medium 50 in the display medium 12 is formed by the previously-colored dispersion medium, and two colors, i.e., the color of the particle group 34 and the color of the dispersion medium 50 are expressed. A structure is also possible in which gap members maintaining a gap in which the particle group 34 can be moved are enclosed in the display medium 54 as shown in FIG 5.

Specifically, a display device 56 according to the second example embodiment of the invention includes a display medium 54 and a writing device 90. Components the same as those of the first example embodiment are designated by the same numerals, and the description thereof is omitted.

The display medium 54 includes the display substrate 20, the back substrate 22, the gap member 24, and the particle group 34. The display substrate 20 constitutes an image display surface. The back substrate 22 faces the display substrate 20 with a gap. The gap member 24 maintains the gap between the substrates at a predetermined interval, and the gap member 24 partitions the inside between the display substrate 20 and the back substrate 22 into plural cells. The particle group 34 is enclosed in each cell. Additionally, in the display medium 54, a large-diameter colored particle group 36 as the space member is enclosed in the cell between the display substrate 20 and the back substrate 22.

The large-diameter colored particle group 36 has a particle diameter larger than that of each particle constituting the particle group 34, and the large-diameter colored particle group 36 has a color different from the color of the particle group 34. The large-diameter colored particle group 36 displays a color different from the color of the particle group 34 in the display medium 54. Although the large-diameter colored particle group 36 is white in color in the present example embodiment, the large-diameter colored particle group 36 is not limited to the color white.

Particles in which a white pigment, such as titanium oxide, silicon oxide, and zinc oxide, is dispersed in polystyrene, polyethylene, polypropylene, polycarbonate, PMMA, an acrylic resin, a phenol resin, a formaldehyde condensate, and the like can be used as the large-diameter colored particle group 36. In the case where particles having a color other than white are used as particles constituting the colored member, for example, a pigment having the desired color and a resin particle containing the dye can be used. Pigments and dyes generally used in printing ink and color toner can be used such as pigments and dyes having, for example, RGB or YMC colors.

The large-diameter colored particle group 36 is enclosed between the substrates by a electrophotographic method, toner jet method, and the like. In the case where the large-diameter colored particle group 36 is immobilized, after the large-diameter colored particle group 36 is enclosed, heating (and pressurizing if needed) is performed to melt the surface layer of the particle group of the large-diameter colored particle group 36, which allows the large-diameter colored particle group 36 to be immobilized while gaps are maintained between the particles.

For example, JP-A No. 2001-312225 discloses the details of the respective members (other than the colored member) constituting the display medium 54, which can be used herein.

The same processes as the first example embodiment are performed by the control unit 18 of the display device 56, and description thereof is omitted.

### Third Example Embodiment

In the present example embodiment, a porous member 58 is further provided in the structure of the display medium 12 and display medium 54 described above in the first example embodiment.

As shown in FIG 6, the display device 60 of the third example embodiment includes a display medium 62 and the writing device 90. Components the same as those of the above example embodiments are designated by the same numerals, and description thereof is omitted.

The display medium 62 includes the display substrate 20, the back substrate 22, and the gap member 24. The display substrate 20 constitutes an image display surface. The back substrate 22 faces the display substrate 20 with a gap. The gap member 24 maintains the gap between the substrates at a predetermined interval, and the gap member 24 partitions the inside between the display substrate 20 and the back substrate 22 into plural cells. The particle group 34, the large-diameter colored particle group 36, and the porous member 58 are provided in the cell.

The porous member 58 is transparent and formed in a layered configuration, being layered onto the display substrate 20. The particle group 34 can be moved toward the display substrate 20 or the back substrate 22 through holes of the porous member 58. Preferably the porous member 58 has a refractive index which is equal to or close to that of the dispersion medium enclosed in the cell. Thus, scattering reflection caused by the difference in refractive index can be suppressed so as to prevent a deterioration in the appearance (a murky white display state).

Preferably the thickness of the porous member 58 is equal to or greater than the volume average particle diameter of the particle group 34. Thus, the particles constituting the particle group 34 enter the holes of the porous member 58, and the particles can reach the side of the display substrate 20 to realize a sufficient display density.

Examples of the porous member 58 include a porous material such as gelatin, porous silica, and polymer such as polyacrylamide having a sponge-like structure. Using particles, which are formed of a transparent resin having thermoplastisic characteristics, such as acrylic resin or styrene resin, and have the same diameter as that of the large-diameter particles, the layer having the porous structure can be formed by arranging the desired amount of particles on the display substrate, and heating and fusing the particles.

The same processes as in the first example embodiment are performed by the control unit 18 of the display device 60, and description thereof is omitted.

### Fourth Example Embodiment

Although the back substrate 22 is not colored in the above example embodiments, the back substrate 22 is colored in the present example embodiment.

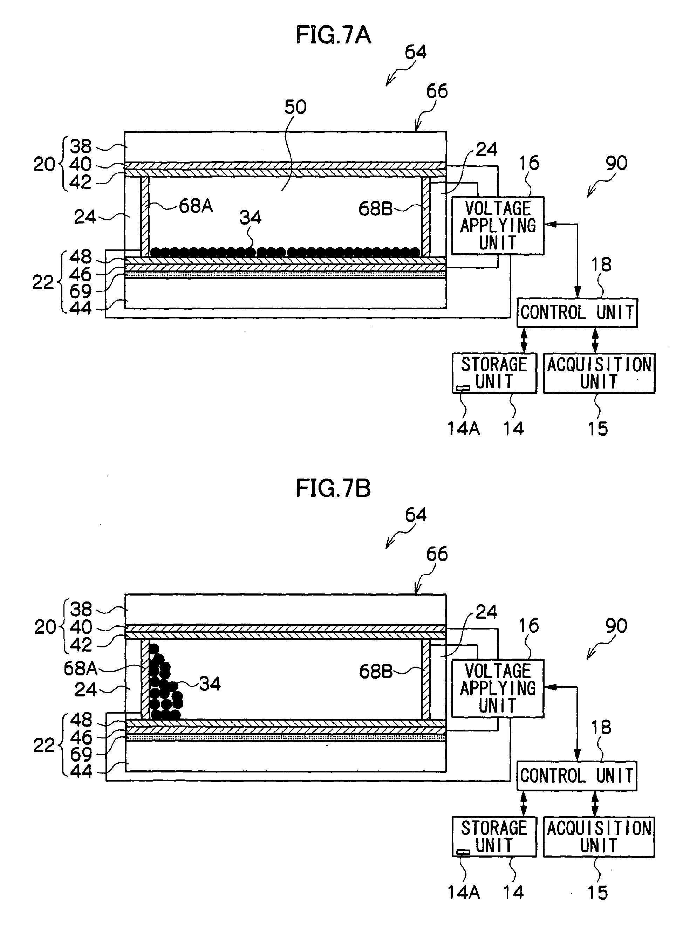

As shown in FIG 7, a display device 64 of the fourth example embodiment includes a display medium 66 and the writing device 90. The same components as the above example embodiments are designated by the same numerals, and the description thereof is omitted.

The display medium 66 includes the display substrate 20, the back substrate 22, and the gap member 24. The display substrate 20 constitutes an image display surface. The back substrate 22 faces the display substrate 20 with a gap therebetween. The gap member 24 maintains the gap between the substrates at a predetermined interval, and the gap member 24 partitions the inside between the display substrate 20 and the back substrate 22 into plural cells. The particle group 34 is enclosed in the cell.

The gap members 24 are provided with electrodes on the surfaces thereof that face each other in the same cell. FIG 7 illustrates, for simplicity of explanation, a case where the pair of gap members 24 is provided in one cell, an electrode 68A is provided in one of the gap members 24, and an electrode 68B is provided in the other gap member 24. In the present example embodiment, the electrode 68A and the electrode 68B are collectively referred to as electrode 68.

The display substrate 20 has a structure in which the surface electrode 40 and the surface layer 42 are sequentially layered on the support substrate 38.

The back substrate 22 has a structure in which a colored substrate 69, the backside electrode 46, and the surface layer 48 are sequentially layered on the support substrate 44. The colored substrate 69 has a color different from the color of the particle group 34. The particle group 34 in the cell is moved toward the electrode 68A or electrode 68B, and thus the color of the display medium 66 is visually observed as the color of the colored substrate 69.

In the present example embodiment, in addition to the processes performed by executing the flowchart of FIG 3 in the first example embodiment, another process is performed in which an image having a color (hue and density) can be displayed in the display medium 66 by applying the voltage between the electrode 68A and the electrode 68B according to the color information obtained by the acquisition unit 15.

In this case, information indicating that the voltage is to be applied between the surface electrode 40 and the backside electrode 46 or information indicating that the voltage is to be applied between the electrode 68A and the electrode 68B is stored in the storage area 14A and correlated with the color information.

The same processes as in the first example embodiment are performed by the control unit 18 of the display device 64, and description thereof is omitted.

In the present example embodiment, the back substrate 22 is colored, and thus when a voltage is applied between the surface electrode 40 and the backside electrode 46 or between the electrode 68A and the electrode 68B according to the color of an image displayed on the display medium 66, a state in which the back substrate 22 is covered with the particle group 34 (see FIG 7A) or a state in which the back substrate 22 is not covered with the particle group 34 due to the particles being moved toward the electrode 68A or the electrode 68B (see FIG 7B) is established, so that more colors may be displayed than in the above-described example embodiments.

In the present example embodiment, description has been made of the case where the surface electrode 40 is provided on the side of the surface substrate 20 of the display medium 66, and the backside electrode 46 is provided on the side of the back substrate 22, however, the invention is not limited to the fourth example embodiment, and a structure in which no electrode is provided on the surface substrate side is also possible.

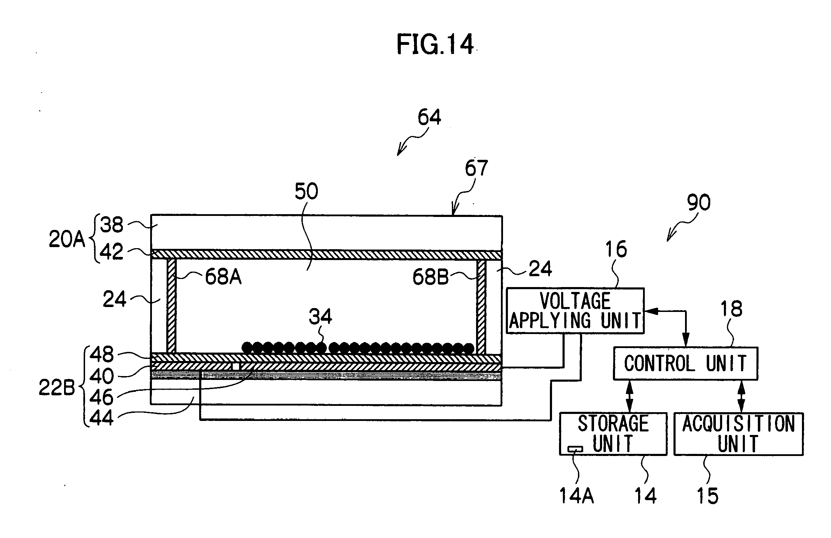

Specifically, as shown in FIG 14, the display medium 67 includes a display substrate 20A, a back substrate 22B, the gap members 24, and the particles 34 enclosed in the cells. The electrode 68A is provided on one of the gap members 24 that face each other, and the electrode 68B is provided on the other gap member 24. The surface substrate 20A has a structure in which the surface layer 42 is layered on the support substrate 38. The back substrate 22B has a structure in which the surface electrode 40, the backside electrode 46, and the surface layer 48 are sequentially layered on the support substrate 44. The surface electrode 40 and the backside electrode 46 are connected to the voltage applying unit 16 so that a signal can be transmitted and received therebetween.

### Fifth Example embodiment

In the above-described example embodiments, description has been made of cases where one kind of the particle group 34, with the particles having the same color and threshold characteristics, is enclosed in each cell of the display medium. However, in the present example embodiment, plural kinds of the particle groups 34 having different colors and threshold characteristics are enclosed in the same cell of the display medium.

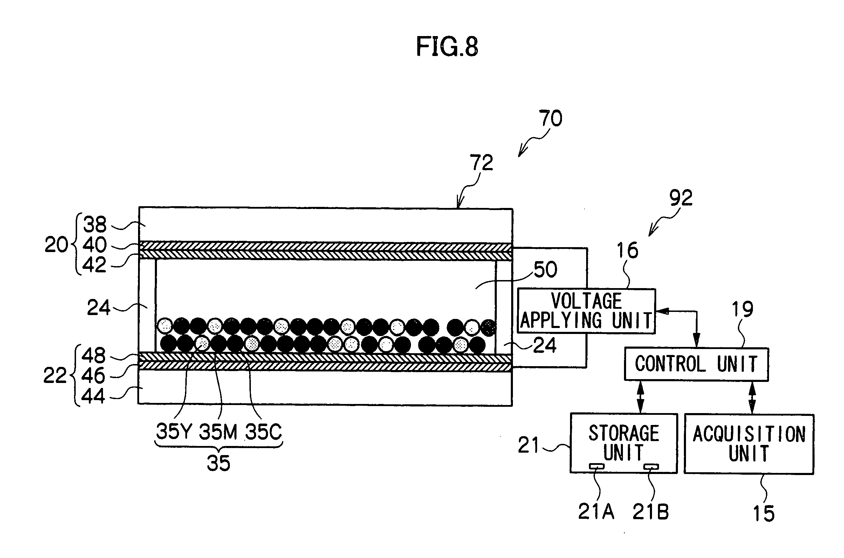

As shown in FIG 8, a display device 70 of the present example embodiment includes a display medium 72 and a writing device 92.

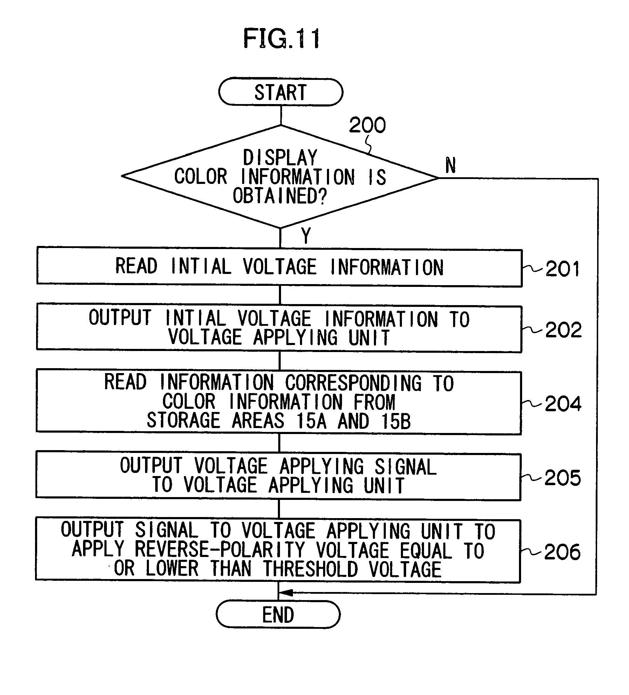

The writing device 92 includes the voltage applying unit 16, a control unit 19, a storage unit 21, and the acquisition unit 15. The voltage applying unit 16, the storage unit 21, and the acquisition unit 15 are connected to the control unit 19 so that a signal can be transmitted and received. Like the control unit 18, the control unit 19 is configured as a microcomputer including CPU, RAM, and ROM. A display program shown by a later-mentioned processing routine of FIG 11 is stored in advance in ROM (not shown). In the present example embodiment, components the same as those of the foregoing example embodiments are designated by the same numerals, and description thereof is omitted.

The display medium 72 includes the display substrate 20, the back substrate 22, the gap members 24, and a particle group 35. The display substrate 20 constitutes the image display surface. The back substrate 22 faces the display substrate 20 with a gap. The gap member 24 maintains the interval between the substrates at a predetermined interval, and the gap member 24 partitions the inside between the display substrate 20 and the back substrate 22 into plural cells. The particle group 35 is enclosed in each cell.

The particle group 35 includes plural kinds of the particle groups having different colors and threshold characteristics. That is, the particle group 35 includes the plural kinds of the particle groups having different colors and threshold voltages.

In the case where, as shown in FIG 8, a magenta particle group 35M having a magenta color, a cyan particle group 35C having a cyan color, and a yellow particle group 35Y having a yellow color are enclosed as the particle groups 35 enclosed in the same cell of the display medium 72, the particles belonging to the magenta particle group 35M, cyan particle group 35C, and yellow particle group 35Y have different threshold voltages in each of the kinds (magenta particle group 35M, cyan particle group 35C, and yellow particle group 35Y) of the particle groups.

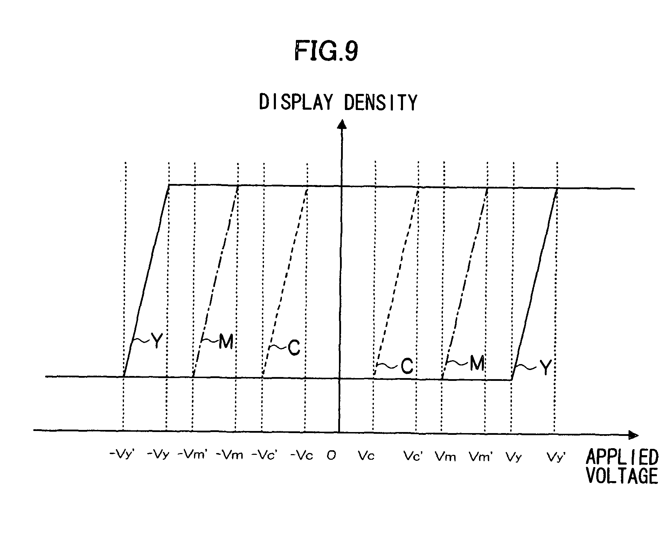

If the threshold voltages of the plural kinds of the particle groups 35 (yellow particle group 35Y, magenta particle group 35M, and cyan particle group 35C) used in the display medium 72 are decreased in the order of the yellow particle group 35Y, magenta particle group 35M, and cyan particle group 35C, then as shown in FIG9, when a voltage Vc is applied between the display substrate 20 and the back substrate 22, a density change, which results in a display density change, is caused due to the cyan particle group 35C being moved in the display medium 72. The display density change caused due to the movement of the cyan particle group 35C ends when a voltage Vc', which is larger than the voltage Vc, is applied.

When a voltage Vm, which is larger than the voltage Vc', is applied, a density change, which results in a display density change, is caused due to the magenta particle group 35M being moved in the display medium 72. The display density change caused due to the movement of the magenta particle group 35M ends when a voltage Vm', which is larger than the voltage Vm, is applied.

When a voltage Vy, which is larger than the voltage Vm', is applied, a density change, which results in a display density change, is caused due to the yellow particle group 35Y being moved in the display medium 72. The display density change caused due to the movement of the yellow particle group 35Y ends when a voltage Vy', which is larger than the voltage Vy, is applied.

When a voltage -Vc is applied between the display substrate 20 and the back substrate 22, a density change, which results in a display density change, is caused due to the cyan particle group 35C being moved in the display medium 72. The display density change caused due tothe movement of the cyan particle group 35C ends when a voltage -Vc', having an absolute value larger than that of the voltage -Vc, is applied.

When a voltage -Vm, having an absolute value larger than that of the voltage -Vc', is applied, a density change, which results in a display density change, is caused due to the magenta particle group 35M being moved in the display medium 72. The display density change caused due to the movement of the magenta particle group 35M ends when a voltage -Vm', having an absolute value larger than that of the voltage -Vm, is applied.

When a voltage -Vy, having an absolute value larger than that of the voltage -Vm', is applied, a density change, which results in a display density change, is caused due to the yellow particle group 35Y being moved in the display medium 72. The display density change caused due to the movement of the yellow particle group 35Y ends when a voltage Vy', having an absolute value larger than that of the voltage Vy, is applied.

Thus, each of the plural kinds of particle groups 35 (yellow particle group 35Y, magenta particle group 35M, and magenta particle group 35C) enclosed in the display medium 72 have different threshold voltages (|Vc|, |Vy|, and |Vm|), which are voltages at which a display density change begins occurring for the color expressed by each particle group. The plural kinds of the particle groups 35 also have different density saturation voltages (|Vc'|, |Vy'|, and |Vm'|).

The particles constituting the particle group 35 may be made of the materials described for constituting the particle group 34 in the first example embodiment, and may be produced by the same methods as for the particle group 34.

As a method of causing the particle groups 35 (yellow particle group 35Y, magenta particle group 35M, and cyan particle group 35C) to have different threshold voltages, the threshold voltage adjusting method of the first example embodiment can be used to adjust the electrostatic forces and constraint forces of the plural kinds of the particle groups 35 (yellow particle group 35Y, magenta particle group 35M, and cyan particle group 35C) such that the different threshold voltage is obtained in each kind of the particle group.

As described in the first example embodiment, one or several items of the average charging amount of the particles, the flow resistance against the dispersion medium of each particle surface, the average magnetic amount (intensity of magnetization), the particle diameter, or the shape factor of the particle, are adjusted for each kind of the particle group, and the configurations of the others are adjusted to predetermined values for each kind of the particle groups. Thus, the particle groups 35 can be adjusted so as to have different threshold voltages for each kind.

The average charge quantity of the particles, the flow resistance against the dispersion medium of each particle surface, the average magnetic amount (intensity of magnetization), the particle diameter, and the shape factor of the particle can be adjusted by the methods of the first example embodiment.

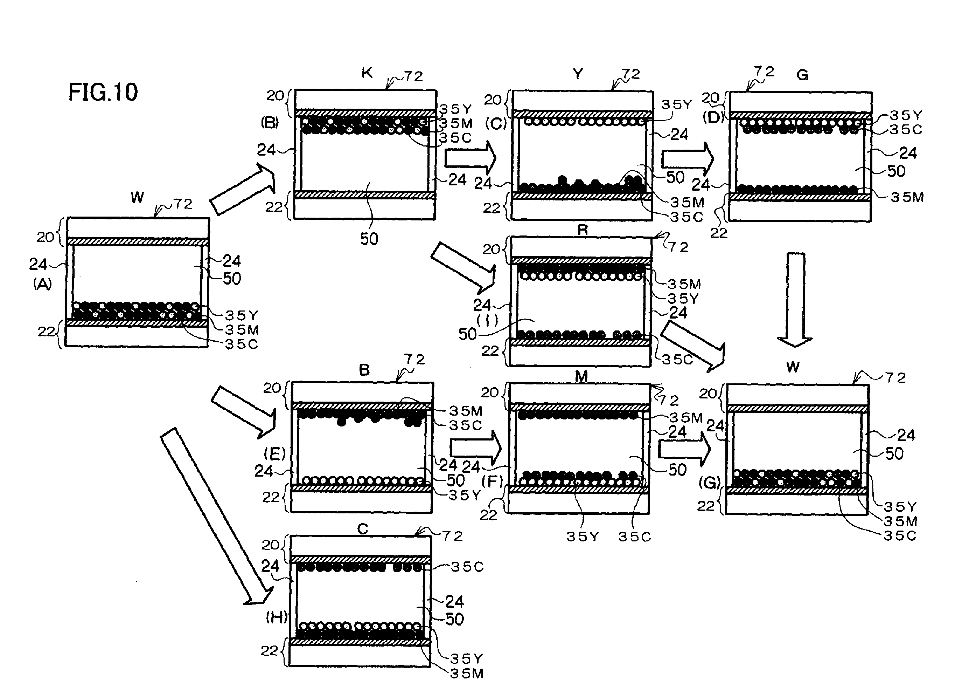

A mechanism of the particle movement when a color display is performed in the display medium 72 will be described with reference to FIG 10.

Description will be made of a case where in the display medium 72, the yellow particle group 35Y (threshold voltage Vc) having the threshold characteristics described above with reference to FIG 9, the magenta particle group 35M (threshold voltage Vm) having the threshold voltage smaller than that of the yellow particle group 35Y, and the cyan particle group 35C (threshold voltage Vc) having the threshold voltage smaller than that of the magenta particle group 35M are enclosed as the plural kinds of the particle groups having different electric field intensities at which the particles start movement according to the color and to the electric field.

As shown in at (A) in FIG 10, it is assumed that the magenta particle group 35M, the cyan particle group 35C, and the yellow particle group 35Y are located at the back substrate 22 in the initial state. For example, when a positive density saturation voltage Vy' exceeding threshold voltage Vy is applied between the display substrate 20 and the back substrate 22, all the particle groups 35, i.e., the magenta particle group 35M, the cyan particle group 35C, and the yellow particle group 35Y are moved toward the display substrate 20. In this state, even if the applied voltage is decreased to zero, the particle groups are not moved, they being adhered to the display substrate 20, and the black color display is maintained in the display medium 72 due to subtractive color mixture (of magenta, cyan, and yellow) of the magenta particle group 35M, the cyan particle group 35C, and the yellow particle group 35Y (see (B) in FIG 10).

When a voltage, which exceeds the negative threshold voltage Vm but is lower than the negative threshold voltage Vy, is applied between the display substrate 20 and the back substrate 22 from the state of (B) in FIG 10, from all the particle groups 35, the magenta particle group 35M having the second largest threshold voltage and the cyan particle group 35C having the smallest threshold voltage are moved toward the back substrate 22. Therefore, since only the yellow particle group 35Y adheres to the display substrate 20, a yellow color is displayed (see (C) in FIG 10).

When a voltage, which exceeds the positive threshold voltage Vc but is lower than the positive threshold voltage Vm, is applied between the display substrate 20 and the back substrate 22 from the state of (C) in FIG 10, from the magenta particle group 35M and cyan particle group 35C which have been moved to the back substrate 22, the cyan particle group 35C having the threshold voltage Vc is moved to the display substrate 20. Therefore, since the yellow particle group 35Y and the cyan particle group 35C adhere to the side of the display substrate 20, a green color is displayed due to the subtractive color mixture of yellow and cyan (see (D) in FIG 10).

When a voltage, which exceeds the negative threshold voltage Vc but is lower than the negative threshold voltage Vm, is applied between the display substrate 20 and the back substrate 22 from the state of (B) in FIG 10, from all the particle groups 35, the cyan particle group 35C having the smallest threshold voltage is moved toward the back substrate 22. Therefore, since the yellow particle group 35Y and the magenta particle group 35M adhere to the display substrate 20, a red color is displayed due to the additive color mixture of cyan and magenta (see (I) in FIG 10).

When a voltage, which exceeds the positive threshold voltage Vm but is lower than the positive threshold voltage Vy, is applied between the display substrate 20 and the back substrate 22 from the initial state shown at (A) in FIG 10, from the whole particle groups 35 (magenta particle group 35M, cyan particle group 35C and the yellow particle group 35Y) excepting the yellow particle group 35Y that has the highest threshold voltage, the magenta particle group 35M and the cyan particle group 35C are moved toward the back substrate 22. Therefore, since the magenta particle group 35M and the cyan particle group 35C adhere to the side of the display substrate 20, a blue color is displayed due to the subtractive color mixture of magenta and cyan (see (E) in FIG 10).

When a voltage, which exceeds the negative threshold voltage Vc but is lower than the negative threshold voltage Vm, is applied between the display substrate 20 and the back substrate 22 from the state of (E) in FIG 10, of magenta particle group 35M and cyan particle group 35C which are adhered to the side of the display substrate 20, the cyan particle group 35C having the threshold voltage Vc is moved toward the back substrate 22. Therefore, since only the magenta particle group 35M adheres to the side of the display substrate 20, a magenta color is displayed (see (F) in FIG 10).

When a voltage, which exceeds the negative threshold voltage Vm but is lower than the negative threshold voltage Vy, is applied between the display substrate 20 and the back substrate 22 from the state of (F) in FIG 10, the magenta particle group 35M adhering to the display substrate 20 is moved toward the back substrate 22. Therefore, since no particle group adheres to the side of the display substrate 20, a white color is displayed as the color of the dispersion medium 50 (see (G) in FIG 10).

When voltage, which exceeds the positive threshold voltage Vc but is lower than the positive threshold voltage Vm, is applied between the display substrate 20 and the back substrate 22 from the state of (A) in FIG 10, from all the particle groups 35 (magenta particle group 35M, cyan particle group 35C and the yellow particle group 35Y), the cyan particle group 35C having the smallest threshold voltage is moved toward the display substrate 20. Therefore, since the cyan particle group 35C adheres to the side of the display substrate 20, a cyan color is displayed (see (H) in FIG 10).

When voltage Vy' having a negative polarity is applied as a voltage, which exceeds the negative threshold voltage Vy, between the display substrate 20 and the back substrate 22 from the state of (I) in FIG 10, all the particle groups 35 are moved toward the back substrate 22, and a white color is displayed as shown at (G) in FIG 10. When the voltage Vy' which exceeds the negative threshold voltage Vy is applied between the display substrate 20 and the back substrate 22 from the state of (D) in FIG 10, all the particle groups 35 are moved toward the back substrate 22, and a white color is displayed as shown at (G) in FIG 10.

Thus, the plural kinds of the particle groups 35 having the different colors and threshold voltages are enclosed in the dispersion medium 50 between the display substrate 20 and back substrate 22 of the display medium 72, and the voltages exceeding the threshold voltages are applied with the polarities of the kind of the particle groups 35 according to each kind of the particle group 35. This enables the desired particle group(s) 35 to be selectively moved to display the plural colors.

The storage unit 21, which stores in advance various types of data such as various tables such as a storage area 21A and a storage area 21B, and initial voltage information representing the voltage applied between the substrates in performing the initial operation, the polarity, and the voltage applying time, stores various types of data.

The storage area 21A is an area in which identification information, threshold voltage information, display driving voltage information, applying time information, and polarity information are stored, correlated with one another. The identification information identifies the kind of the particle group 35. The threshold voltage information indicates the threshold voltage corresponding to the kind of the particle group 35. The display driving voltage information indicates the voltage exceeding the threshold voltage. The applying time information indicates the applying time of the display driving voltage.

The display driving voltage information, the applying time information, and the polarity information, which are stored in the storage area 21A, may be stored as voltage waveform information in the storage area 21A.

More specifically, the voltage waveform information represents a waveform showing the voltage applied between the substrates and the voltage applying time when the color of the particle group 35 which is to be moved is to be displayed with a predetermined density, and in practice, a voltage which is changed according to the voltage waveform of the voltage waveform information is applied, and thereby the color of the particle group 35 which is to be moved can be displayed at the predetermined color (hue and brightness). The voltage waveform information is information on the waveform expressed by, e.g., a rectangular wave. Therefore, the polarity of the display driving voltage exceeding the threshold voltage of the particle group 35 which is to be moved and the applying time of the display driving voltage can be indicated by adjusting a pulse width, pulse number, and the voltage of a flat portion of the waveform. In the present example embodiment, it is assumed that the display driving voltage information, the applying time information, and the polarity information are stored as the voltage waveform information in the storage area 21 A.

The storage area 21 A stores the identification information identifying the kind of the particle group 35, the threshold voltage information indicating the threshold voltage corresponding to the kind of the particle group 35, and the threshold voltage information are stored in the storage area 21 A, correlated with one each other in a one-to-one-to-one relationship.

The storage 21B is an area in which are stored color information, one or plural pieces of sequence information, polarity information for each, and one or several pieces of identification information, correlated with one another. The color information indicates the color of the display image. The sequence information indicates a voltage applying sequence. The polarity information indicates the polarity of the voltage applied based on the sequence information. The identification information identifies the one or the plurality of particle group(s) which is/are to be moved by the voltage application based on the sequence information.

The definitions of the polarity information, threshold voltage information, display driving voltage information, and display driving voltage applying time information which are stored in the storage area 21A and storage area 21B are similar to those described in the first example embodiment, and description thereof is omitted.

The sequence information stored in the above storage area 2B represents the sequence of respective voltages which are represented by plural types of voltage waveforms of the voltage waveform information and sequentially applied between the substrates application when an image of a predetermined color is displayed on the display medium 72.

Since various pieces of information are stored in the storage area 21A and storage area 21B, as described above with reference to FIG 10, a voltage having a polarity corresponding to the kind of each particle group 35 and exceeding the threshold voltage corresponding to the kind of each particle group 35 is applied to selectively move the desired particle group(s) 35, and so plural colors may be displayed.

When the voltages are applied to cause the respective colors to be displayed on the display medium 72, some of the particles in the particle groups 35 that are not the particle group 35 which is to be moved begin to be moved under the influence of the movement of the kind of the particle group 35 which is to be moved between the substrates, and the some of the particles are suspended between the display substrate 20 and the back substrate 22.

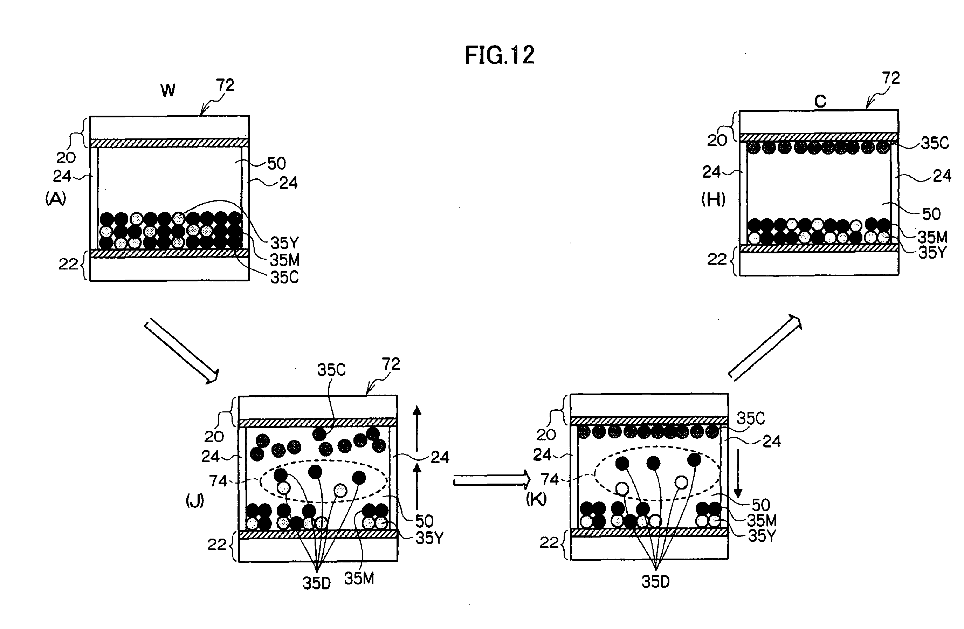

Specifically, from the initial state of (A) in FIG. 10, in order to display the cyan color (see (H) of FIG 10) by causing the cyan particle group 35C to be moved toward the display substrate 20), voltage which exceeds the positive threshold voltage Vc but is lower than the positive threshold voltage Vm is applied to the display medium 72 which is in the initial state (see (A) in FIG.10A or (A) in FIG 12), and thus some of the particles in the magenta particle group 35M and yellow particle group 35Y begin to be moved toward the display substrate 20 under the influence of the movement of cyan particle group 35C toward the display substrate 20, which sometimes causes some of the particles to be suspended between the display substrate 20 and the back substrate 22 (see dotted line 74 shown in (J) in FIG 12).

Thus, in the display device 70 of the present example embodiment, the voltage of the voltage waveform for displaying the target display color on the display medium 72, i.e., a display driving voltage exceeding the threshold voltage of the particle group 35 having the smallest voltage in the plural kinds of the particle groups 35 which are to be moved targets is applied, and a voltage which has the reverse polarity from the polarity of the display driving voltage and is smaller than the threshold voltage is applied.

The operation of the display device 70 will be described with reference to FIG 11.

FIG 11 is a flowchart showing a display program executed by the control unit 19 when an image having a predetermined color (hue and brightness) is displayed on the display medium 72. The display program is previously stored in a predetermined area of ROM (not shown) of the control unit 19, and CPU (not shown) of the control unit 19 reads the display program from ROM and executes the display program.

For the purpose of simplifying explanation, description will be given of a case where the cyan color is displayed when the display medium 72 is in the initial state (white display) (see (H) in FIG 10).

Here, let it be assumed that the particle group 35 enclosed in the cell of the display medium 72 includes the three kinds of the particle groups 35 (yellow particle group 35Y, the magenta particle group 35M, and the cyan particle group 35C), and exhibits the threshold characteristics shown in FIG 9 with respect to the voltages applied between the surface electrode 40 and the backside electrode 46.

In the control unit 19, the processing routine shown in FIG 11 is performed at predetermined time intervals, and the flow proceeds to Step 200.

In Step 200, it is determined whether or not the display color information is obtained from the acquisition unit 15. If the result of the determination is positive, the routine is ended. If the result of the determination is negative, the flow proceeds to Step 201.

The display color information includes color information representing the color displayed on the display medium 72.

In Step 201, the initial voltage information is read from the storage unit 21 as the initial operation. In Step 202, an operation signal indicating the read initial voltage information is outputted to the voltage applying unit 16.

The initial voltage information indicates the value, polarity, and applying time of the voltage applied between the substrates in performing the initial display. In the present example embodiment, in order to display a white color, the initial voltage information includes the voltage information, the positive electrode information, and the voltage applying information. The voltage information indicates the voltage Vy' exceeding the threshold voltage Vy, which is the largest of the threshold voltages of the yellow particle group 35Y, magenta particle group 35M, and cyan particle group 35C. The voltage applying information indicates the time for which the voltage Vy' is to be continuously applied to display the white color.

Upon receipt of the operation signal, the voltage applying unit 16 applies a voltage between the surface electrode 40 and the backside electrode 46 for the voltage applying time of the voltage applying time information. The voltage is applied according to the polarity information, voltage information, and voltage applying time information, which are included in the operation signal.

Through the process of Step 202, a voltage having the voltage value Vy' is applied with the surface electrode 40 as the positive electrode and with the backside electrode 46 as the negative electrode. As shown at (A) of FIG. 12A or (A) of 10, all the plural kinds of the particle groups 35 are caused to move toward the back substrate 22. Thus, a white color is visible, as the color of the dispersion medium 50, when the display medium 12 is viewed from the side of the display substrate 20.

In next Step 204, one or more pieces of sequence information, polarity information for each, and one or more pieces of identification information which correspond to the color information included in the display color information obtained in Step 200, are read from the storage area 21B of the storage unit 21. The sequence information indicates the voltage applying sequence. The polarity information indicates the polarity of the voltage applied based on the sequence information. The identification information identifies the one or the plural particle groups which is/are to be moved by the voltage application based on the sequence information. Also, the threshold voltage information and voltage waveform information which correspond to the identification information are read from the storage area 21A.

In next Step 205, the voltage applying signal is outputted from the voltage applying unit 16 based on the piece(s) of information read in Step 204.

The voltage applying signal in step 205 selects, based on the piece(s) of information read in Step 204 and for each sequence information, the kind of the particle group 35 having the largest threshold voltage in the piece or pieces of identification information (information indicating the kind of the particle group 35) corresponding to each sequence information, and extracts the voltage waveform corresponding to the identification information on the selected particle group 35. Then, the voltage waveforms are outputted to the voltage applying unit 16 in the incremental order of the sequence information corresponding to the extracted voltage waveform.

Upon receipt of the voltage applying signal, the voltage applying unit 16 applies a voltage between the surface electrode 40 and the backside electrode 46. The voltage is changed with one or more of the voltage waveforms included in the received voltage applying signal.

The process of Step 200 corresponds to the acquiring step of the display program of the invention, and the processes of Steps 204 and 205 correspond to the first voltage applying step of the display program of the invention.

When the display color information indicating the red color is obtained by the process of Step 205, the display driving voltage Vy', which exceeds the threshold voltage Vy of the positive polarity, is applied to the display medium 72 which is in the initial state (see (A) in FIG 10) in response to the voltage waveform having the first order in the voltage applying sequence, and thereby the cyan particle group 35C, the magenta particle group 35M, and the yellow particle group 35Y are caused to move toward the display substrate 20. Then, a negative voltage, which exceeds the threshold voltage Vc but is lower than the threshold voltage Vm, is applied in response to the voltage waveform having the next order in the voltage applying sequence, which causes the cyan particle group 35C to be moved toward the back substrate 22 (see (I) in FIG 10).

When, for example, the display color information indicating the cyan color is obtained by the process of Step 205, a voltage exceeding the positive threshold voltage Vc but not exceeding the positive threshold voltage Vm is applied to the display medium 72 which is in the initial state (see (A) in FIG 10) in response to the voltage waveform having the first order in the voltage applying sequence, and thereby the cyan particle group 35C is caused to move toward the display substrate 20 (see (H) in FIG 12 or (H) in FIG 10).

Here, it sometimes occurs that the particles of the particle groups 35 that are not the kind of the particle group 35 which is to be moved are moved in response to the movement of the particle to be moved and become in a suspended state between the substrates.

For example, in the case where the cyan color is displayed, when the cyan particle group 35C is moved toward the display substrate 20, it sometimes occurs that some of the particles of the magenta particle group 35M and yellow particle group 35Y that are not the particles to be moved begin to be moved while being influenced by the movement of the cyan particle group 35C, and the part of the particles are suspended between the display substrate 20 and the back substrate 22 (see particles 35D shown by the dotted line 74 of (J) in FIG 12).

In next Step 206, in a process in which the voltages indicated by the voltage waveform according to the voltage applying sequence in Step 205 are sequentially applied, a voltage which varies with the voltage waveform corresponding to sequence information having the last order in the sequence of the sequence information read in Step 204 is applied, and thus a voltage equal to or lower than the threshold voltage of the particle group 35 having the smallest threshold voltage in the particle groups 35 to be moved is applied between the substrates with a polarity reverse to the polarity of the voltage applied when the particle group(s) 35 is/are finally moved, and then the routine is ended.

The process of Step 206 corresponds to the fourth voltage applying step of the display program of the invention.

When, for example, the display medium 72 is in the state in which suspended particles are generated as shown in (J) of FIG. 12 by the process of Step 206, the cyan particle group 35C is the particle group 35 which becomes the target moved by applying a voltage changing with the finally applied voltage waveform. Thus, a voltage equal to or lower than the threshold voltage of the cyan particle group 35C is applied with a polarity reverse to the polarity of the last applied display driving voltage.

By the process of Step 206, the suspended particles (see particles 35D shown by the dotted line 74 of (K) in FIG 12) generated by the process of Step 205 are moved toward the back substrate 22 and reaches the back substrate 22, while the particles that have reached the display substrate 20 or back substrate 22 as a result of Step 205 are retained on each respective substrate, as shown at (H) of FIG 12.

Thus, the particle group 35 of the kind and number with which the color corresponding to the display color information obtained in Step 200 can be expressed is retained at the display substrate 20, and the particles suspended between the display substrate 20 and back substrate 22 are caused to move to the other substrate, whereby generation of the suspended particles is suppressed.

The process of Step 206 is performed after the process of displaying the target color (corresponds to the process of Step 205), even if the plural steps of applying voltages are required to display a color different from both the display color in the initial state and the target color as shown at (I) in FIG 10. Thus, in the process of Step 206, a voltage equal to or lower than the threshold voltage of the finally moved particles may be applied so that there may be an effective reduction in the presence of the suspended particles.

## Claims

1. A display device comprising:
a display medium comprising
a pair of substrates disposed with a distance therebetween, at least one of the substrates having translucency,
a dispersion medium that is disposed between the pair of substrates, and
a particle group that is dispersed in the dispersion medium and moved in the dispersion medium according to an electric field formed by applying a voltage exceeding a predetermined threshold voltage between the pair of substrates;
a voltage applying unit that applies a voltage between the pair of substrates; and
a control unit that controls the voltage applying unit,
wherein the control unit controls the voltage applying unit so as to apply a first voltage exceeding the threshold voltage between the pair of substrates, then to apply a voltage equal to or lower in magnitude than the threshold voltage but having a polarity that is the reverse to the polarity of the first voltage.

2. The display device of claim 1, further comprising:
an acquisition unit that acquires color information indicating a color of an image to be displayed on the display medium; and
a storage unit in which the color information, threshold voltage information, first voltage information, and applying time information are stored in advance, correlated with one another, the threshold voltage information indicating the threshold voltage of the particle group, the first voltage information indicating the first voltage exceeding the threshold voltage, the applying time information indicating the time for which the first voltage is to be applied, wherein
the control unit reads the threshold voltage information, the first voltage information, and the applying time information from the storage unit that correspond to the color information obtained by the acquisition unit,
the control unit controls the voltage applying unit to apply the first voltage of the first voltage information for the applying time of the applying time information, and
the control unit controls the voltage applying unit to apply the voltage equal to or lower in magnitude than the threshold voltage of the threshold voltage information but having the polarity that is the reverse to the polarity of the first voltage.

3. A display device comprising:
a display medium comprising
a pair of substrates disposed with a distance therebetween, at least one of the substrates having translucency,
a dispersion medium that is disposed between the pair of substrates, and
a particle group that is dispersed in the dispersion medium and moved in the dispersion medium according to an electric field formed by applying a voltage exceeding a predetermined threshold voltage between the pair of substrates;
a voltage applying unit that applies a voltage between the pair of substrates; and
a control unit that controls the voltage applying unit,
wherein the control unit controls the voltage applying unit so as to
apply the first voltage between the pair of substrates, the first voltage exceeding the threshold voltage of a particle group to be moved, and then
the control unit controls the voltage applying unit to form an electric field, the electric field moving another particle group, which is suspended in the dispersion medium and is not the particle group to be moved, in a direction opposite to the moving direction of the particle group to be moved.

4. A display device comprising:
a display medium comprising
a pair of substrates disposed with a distance therebetween, at least one of the substrates having translucency,
a dispersion medium that is disposed between the pair of substrates, and
a plurality of particle groups that are dispersed in the dispersion medium and moved in the dispersion medium according to an electric field formed by applying a voltage exceeding a predetermined threshold voltage between the pair of substrates, the plurality of particle groups being different from each other in terms of color and threshold voltage
a voltage applying unit that applies a voltage between the pair of substrates; and
a control unit that controls the voltage applying unit to apply the first voltage between the pair of substrates, the first voltage exceeding a threshold voltage of the particle group having the smallest threshold voltage in one or a plurality of the particle group(s) to be moved, and then controls the voltage applying unit to apply a voltage equal to or lower in magnitude than the threshold voltage but having a polarity that is the reverse to the polarity of the first voltage.

5. The display device of claim 4, further comprising:
an acquisition unit that acquires color information indicating a color of an image to be displayed on the display medium; and
a storage unit in which identification information, threshold voltage information, first voltage information, and applying time information are stored in advance, correlated with one another, the identification information identifying the particle group, the threshold voltage information indicating a threshold voltage of the particle group, the first voltage information indicating the first voltage exceeding the threshold voltage, the applying time information indicating the time for which the first voltage is to be applied, and in which the color information, the identification information, and sequence information are stored in advance in the storage unit, correlated with one another, the identification information identifying the one or the plurality of particle group(s) to be moved, the sequence information indicating a moving sequence of the particle group(s), wherein
the control unit reads the identification information and the sequence information on the one or the plurality of particle group(s) from the storage unit, the identification information and the sequence information corresponding to the color information acquired by the acquisition unit,
the control unit reads the first voltage information and the applying time information from the storage unit, the first voltage information and the applying time information corresponding to the color information acquired by the acquisition unit,
the control unit controls the voltage applying unit to apply the first voltage(s) of the first voltage information corresponding to the identification information for the applying time(s) of the applying time information corresponding to the identification information in the order of the sequence information, and then
the control unit controls the voltage applying unit to apply a voltage equal to or lower in magnitude than the threshold voltage of the threshold voltage information corresponding to the first voltage information of the last applied first voltage in the sequence but having a polarity that is the reverse to the polarity of the finally applied first voltage,.

6. A display device comprising:
a display medium comprising
a pair of substrates disposed with a distance therebetween, at least one of the substrates having translucency,
a dispersion medium that is disposed between the pair of substrates, and
a plurality of particle groups that are dispersed in the dispersion medium and moved in the dispersion medium according to an electric field formed by applying a voltage exceeding a predetermined threshold voltage between the pair of substrates, the plurality of particle groups being different from each other in terms of color and threshold voltage
a voltage applying unit that applies a voltage between the pair of substrates; and
a control unit that controls the voltage applying unit to apply the first voltage between the pair of substrates, the first voltage exceeding the threshold voltage of the particle group having the smallest threshold voltage in the one or the plurality of particle group(s) to be moved, and then controls the voltage applying unit to form the electric field, the electric field moving particle group(s), which is/are suspended in the dispersion medium and are not the particle group(s) to be moved, in the direction that is the opposite to the moving direction of the particle group(s) to be moved.

7. The display device of one of claims 1-6, wherein the dispersion medium is colored in advance with a color that is different from that of the particle group included in the dispersion medium.

8. The display device of one of claims 1-7, wherein one of the pair of substrates is colored in advance with a color that is different from that of the particle group.

9. The display device of one of claims 1-8, further comprising a gap member provided between the pair of substrates, the gap member including gaps in which the particle group can be moved.

10. The display device of claim 9, wherein the gap member is colored in advance in a color that is different from that of the particle group.

11. The display device of claim 9 or 10, wherein the gap member comprises white particles.

12. The display device of one of claims 1-11, wherein a porous member is layered onto the display-side substrate in the pair of substrates.

13. A writing device comprising:
a voltage applying unit that applies a voltage between a pair of substrates of a display medium, the display medium comprising
a pair of substrates disposed with a distance therebetween, at least one of the substrates having translucency,
a dispersion medium that is disposed between the pair of substrates, and
a particle group that is dispersed in the dispersion medium, the particle group being moved in the dispersion medium according to an electric field that is formed by applying a voltage exceeding a predetermined threshold voltage between the pair of substrates; and
a control unit that controls the voltage applying unit so as to apply a first voltage exceeding the threshold voltage between the pair of substrates, then to apply a voltage equal to or lower in magnitude than the threshold voltage but having a polarity that is the reverse to the polarity of the first voltage.

14. The writing device of claim 13, further comprising:
an acquisition unit that acquires color information indicating a color of an image to be displayed on the display medium; and
a storage unit in which the color information, threshold voltage information, first voltage information, and applying time information are stored in advance, correlated with one another, the threshold voltage information indicating a threshold voltage of the particle group, the first voltage information indicating the first voltage exceeding the threshold voltage, the applying time information indicating the time for which the first voltage is to be applied,
wherein
the control unit reads the threshold voltage information, the first voltage information, and the applying time information from the storage unit that correspond to the color information acquired by the acquisition unit,
the control unit controls the voltage applying unit to apply the first voltage of the first voltage information for the applying time of the applying time information, and
the control unit controls the voltage applying unit to apply the voltage equal to or lower in magnitude than the threshold voltage of the threshold voltage information but having the polarity that is the reverse to the polarity of the first voltage.

15. A writing device comprising:
a voltage applying unit that applies a voltage between a pair of substrates of a display medium, the display medium comprising
a pair of substrates disposed with a distance therebetween, at least one of the substrates having translucency,
a dispersion medium that is disposed between the pair of substrates, and
a particle group that is dispersed in the dispersion medium, the particle group being moved in the dispersion medium according to an electric field that is formed by applying a voltage exceeding a predetermined threshold voltage between the pair of substrates; and
a control unit controls the voltage applying unit so as to apply the first voltage between the pair of substrates, the first voltage exceeding the threshold voltage of a particle group to be moved, and then controls the voltage applying unit to form an electric field, the electric field moving another particle group, which is suspended in the dispersion medium and is not the particle group to be moved, in a direction opposite to the moving direction of the particle group to be moved.

16. A display device comprising:
a display medium comprising
a pair of substrates disposed with a distance therebetween, at least one of the substrates having translucency,
a dispersion medium that is disposed between the pair of substrates, and
a plurality of particle groups that are dispersed in the dispersion medium and moved in the dispersion medium according to an electric field formed by applying a voltage exceeding a predetermined threshold voltage between the pair of substrates, the plurality of particle groups being different from each other in terms of color and threshold voltage
a voltage applying unit that applies a voltage between the pair of substrates; and
a control unit that controls the voltage applying unit to apply the first voltage between the pair of substrates, the first voltage exceeding a threshold voltage of the particle group having the smallest threshold voltage in one or a plurality of the particle group(s) to be moved, and then controls the voltage applying unit to apply a voltage equal to or lower than the threshold voltage but having a polarity that is the reverse to the polarity of the first voltage.

17. The writing device of claim 16, further comprising:
an acquisition unit that acquires color information indicating a color of an image to be displayed on the display medium; and
a storage unit in which identification information, threshold voltage information, first voltage information, and applying time information are stored in advance, correlated with one another, the identification information identifying the particle group, the threshold voltage information indicating a threshold voltage of the particle group, the first voltage information indicating the first voltage exceeding the threshold voltage, the applying time information indicating the time for which the first voltage is to be applied, and in which the color information, the identification information, and sequence information are stored in advance in the storage unit, correlated with one another, the identification information identifying the one or the plurality of particle group(s) which to be moved, the sequence information indicating a moving sequence of the particle group(s), wherein
the control unit reads the identification information and the sequence information on the one or the plurality of particle group(s) from the storage unit, the identification information and the sequence information corresponding to the color information acquired by the acquisition unit,
the control unit reads the first voltage information and the applying time information from the storage unit, the first voltage information and the applying time information corresponding to the color information acquired by the acquisition unit,
the control unit controls the voltage applying unit to apply the first voltage(s) of the first voltage information corresponding to the identification information for the applying time(s) of the applying time information corresponding to the identification information in the order of the sequence information, and then
the control unit controls the voltage applying unit to apply a voltage equal to or lower in magnitude than the threshold voltage of the threshold voltage information corresponding to the first voltage information on the finally applied first voltage in the sequence but having a polarity that is the reverse to the polarity of the finally applied first voltage.

18. A display device comprising:
a display medium comprising
a pair of substrates disposed with a distance therebetween, at least one of the substrates having translucency,
a dispersion medium that is disposed between the pair of substrates, and
a plurality of particle groups that are dispersed in the dispersion medium and moved in the dispersion medium according to an electric field formed by applying a voltage exceeding a predetermined threshold voltage between the pair of substrates, the plurality of particle groups being different from each other in terms of color and threshold voltage
a voltage applying unit that applies a voltage between the pair of substrates; and
a control unit that controls the voltage applying unit to apply the first voltage between the pair of substrates, the first voltage exceeding the threshold voltage of the particle group having the smallest threshold voltage in the one or the plurality of particle group(s) to be moved, and then controls the voltage applying unit to form the electric field, the electric field moving particle group(s), which is/are suspended in the dispersion medium and are not the particle group(s) to be moved, in the direction that is the opposite to the moving direction of the particle group(s) to be moved.

19. A display program that causes a computer: to execute a process to drive and display a display medium, the display medium comprising
a pair of substrates disposed with a distance therebetween, at least one of the substrates having translucency,
a dispersion medium that is disposed between the pair of substrates, and
a particle group that is dispersed in the dispersion medium, the particle group being moved in the dispersion medium according to an electric field formed by applying a voltage exceeding a predetermined threshold voltage between the pair of substrates, the display program causing a computer to execute a process comprising:
applying a first voltage exceeding the threshold voltage between the pair of substrates, and then
applying a second voltage between the pair of substrates of the display medium equal to or lower in magnitude than the threshold voltage but with a polarity that is the reverse to the polarity of the first voltage.

20. The display program of claim 19, which causes a computer to execute the process further comprising:
acquiring color information indicating a color of an image to be displayed on the display medium;
storing in advance the color information, threshold voltage information, first voltage information, and applying time information, correlated with each other, the threshold voltage information indicating the threshold voltage of the particle group, the first voltage information indicating the first voltage exceeding the threshold voltage, the applying time information indicating the time for which the first voltage is to be applied, wherein,
when applying the first voltage, the threshold voltage information, first voltage information, and applying time information that correspond to the color information acquired in the acquiring are read, and the first voltage of the first voltage information is applied between the pair of substrates for the applying time of the applying time information.

21. A display program that causes a computer to execute a process to drive and display a display medium, the display medium comprising
a pair of substrates disposed with a distance therebetween, at least one of the substrates having translucency,
a dispersion medium that is disposed between the pair of substrates, and
a particle group that is dispersed in the dispersion medium, the particle group being moved in the dispersion medium according to an electric field which is formed by applying a voltage exceeding a predetermined threshold voltage between the pair of substrates, the display program causing a computer to execute a process comprising:
applying a first voltage exceeding the threshold voltage between the pair of substrates, and then
applying a second voltage between the pair of substrates of the display medium equal to or lower in magnitude than the threshold voltage but with a polarity that is the reverse to the polarity of the first voltage
applying, between the pair of substrates of the display medium, a third voltage that is the first voltage exceeding the threshold voltage of the particle group having the smallest threshold voltage in magnitude of the one or the plurality of the particle group(s) to be moved; and then
applying, between the pair of substrates of the display medium, a fourth voltage having a polarity that is the reverse of the polarity of the first voltage of the particle group having the smallest threshold voltage in magnitude of the one or the plurality of the particle group(s) to be moved, the fourth voltage being equal to or lower in magnitude than the threshold voltage of the particle group having the smallest threshold voltage in magnitude of the one or the plurality of the particle group(s) to be moved.

22. The display program of claim 21, which causes a computer to further execute the process further comprising:
acquiring color information indicating a color of an image displayed on the display medium,
storing in advance the color information, threshold voltage information, first voltage information, and applying time information, correlated with each other, the threshold voltage information indicating the threshold voltage of the particle group, the first voltage information indicating the first voltage exceeding the threshold voltage, the applying time information indicating the time for which the first voltage is to be applied, and
further storing in advance, correlated to each other, the color information, identification information that identifies the one or the plurality of the particle group(s) to be moved, and sequence information indicating a moving sequence of the particle group(s)
wherein: when applying the third voltage, the identification information and the sequence information corresponding to the color information acquired in the acquiring of the one or the plurality of the particle group(s) are read; the first voltage information and the applying time information which correspond to the identification information are read; and the first voltage(s) of the first voltage information corresponding to the identification information is/are applied between the pair of substrates for the applying time(s) of the applying time information in the order of the sequence information corresponding to the identification information.
